# EUROPEAN PATENT SPECIFICATION

(11) **EP 3 841 550 B1**
(45) Date of publication and mention of the grant of the patent: **24.08.2022**
(21) Application number: 20759700.6
(22) Date of filing: 12.06.2020
(51) Int. Cl.: H04L 9/32, G06Q 40/08, H04L 67/104

(54) **STORAGE MANAGEMENT BASED ON MESSAGE FEEDBACK**
SPEICHERVERWALTUNG AUF BASIS VON NACHRICHTENRÜCKMELDUNG
GESTION DE STOCKAGE BASÉE SUR UNE RÉTROACTION DE MESSAGE

(43) Date of publication of application: 30.06.2021
(73) Proprietor: Alipay Labs (Singapore) Pte. Ltd., Singapore 189554 (SG)
(72) Inventor: FANG, Hui, Hangzhou, Zhejiang 310000 (CN)
(74) Representative: Fish & Richardson P.C.
(86) International application number: PCT/CN2020/095971
(87) International publication number: WO 2020/169128

(56) References cited:
- EP-A1- 3 617 969
- WO-A1-2019/147146
- WO-A1-2020/003287
- US-A1- 2019 057 454
- US-A1- 2019 080 284
- US-A1- 2020 051 174
- Copigneaux Bertrand ET AL: "Blockchain for supply chains and international trade", , 1 May 2020 (2020-05-01), pages 1-172, XP055819944, Retrieved from the Internet: URL:https://www.europarl.europa.eu/RegData /etudes/STUD/2020/641544/EPRS_STU(2020)641 544_EN.pdf [retrieved on 2021-06-30]
- Ganne Emmanuelle: "Can blockchain revolutionize international trade?", , 1 January 2018 (2018-01-01), pages 1-163, XP055819956, ISBN: 978-92-8-704761-8 Retrieved from the Internet: URL:https://www.wto.org/english/res_e/book sp_e/blockchainrev18_e.pdf [retrieved on 2021-06-30]

## Description

### TECHNICAL FIELD

This specification relates to providing blockchain-based message services for storage management.

### BACKGROUND

Distributed ledger systems (DLSs), which can also be referred to as consensus networks, and/or blockchain networks, enable participating entities to securely, and immutably store data. DLSs are commonly referred to as blockchain networks without referencing any particular user case. Examples of types of blockchain networks can include public blockchain networks, private blockchain networks, and consortium blockchain networks. A consortium blockchain network is provided for a select group of entities, which control the consensus process, and includes an access control layer.

Digital networks have enabled people around the world to find information and interact with each other conveniently and efficiently. For example, social media platforms allow people to easily share messages, photos, and videos with friends and colleagues. Online shopping web sites allow consumers to easily find information on a variety of products and send payments electronically to purchase products from businesses all over the world. Various kinds of payment and delivery services allow e-business providers and consumers to perform online and international transactions and shipments more easily. As more people are connected to the Internet and more transactions are conducted digitally online, demand for protection of valuables during shipping has increases, together with data to be handled by insurance companies to provide shipping protections.

Parties such as online shopping platform, delivery services provider, and insurance companies are often involved in providing shipping insurances. There can be many data exchanges between the parties to fulfill each shipping insurance order and finalize insurance payments. The data and messages exchanged between the parties are often communicated through point-to-point communications, which makes it difficult to verify data authenticity and recover from data losses. Moreover, data supplied from different parties can be inconsistent, which reduces processing efficiency of the shipping insurances and insurance premium distributions.

It would be desirable to have a unified platform that can provide transparent, efficient, consistent, and verifiable data and message services to facilitate shipping insurance data processing and storage, while ensuring data privacy and integrity of the parties involved. WO 2020/003287 A1 describes a distributed ledger based platform for trading and delivering commodities as well as other goods and services. The system allows participants to exchange trade requests, reach an agreement, create a smart contract involving buyer/seller and other service providers like shipping, insurance and inspection companies, generate notifications that actions are required from those parties and form a decentralized consensus among the relevant parties that those actions have been fulfilled.
Copigneaux Bertrand et al.: "Blockchain for supply chains and international trade", 1 May 2020, pages 1-172, describes an analysis of blockchain technology in the context of international trade. The potential impacts of blockchain development and applications is analyzed in eight use cases for supply chains and international trade. An analysis of the current legislative frameworkand existing initiatives is also provided. Based on the analysis, and following a consultation of relevant organisations, several challenges in international trade documentation and processes are identified, and a range of policy options for the European Parliament are presented.
Ganne Emmanuelle: "Can blockchain revolutionize international trade?", 1 January 2018, pages 1-163, seeks to demystify the Blockchain phenomenon by providing a basic understanding of the technology and its main functionalities. It showcases some trade-related applications and analyses the relevance of the technology for international trade by reviewing how it is currently used or can be used in the various areas covered by the WTO. A glimpse is provided of whether the widespread adoption of this technology could affect cross-border trade transactions and, if so, to what extent, and various challenges that must be addressed before the technology can be used on a wide scale are discussed.

### SUMMARY

Described embodiments of the subject matter can include one or more features, alone or in combination. The invention is defined by the appended claims.

For example, in one embodiment not covered by the appended claims, a computer-implemented method performed by a computing system comprises: receiving shipping data and shipping insurance order data associated with a purchase order; determining, by executing a first smart contract based on first one or more predetermined rules and the shipping data, whether a shipping insurance order corresponding to the shipping insurance order data is valid; in response to determining that the shipping insurance order is valid, initiating a consensus algorithm to record the shipping data and the shipping insurance order data on a blockchain; generating, by executing the first smart contract, a first event message including a notification that a shipping insurance of the purchase order is effective; receiving shipping insurance premium distribution data indicating a distribution of shipping insurance premium associated with the shipping insurance order to one or more service providers; determining, by executing a second smart contract based on second one or more predetermined rules, that the distribution of the shipping insurance premium is legal; initiating the consensus algorithm of the blockchain network to record the shipping insurance premium distribution data on a blockchain; and generating, by executing the second smart contract, a second event message notifying that the shipping insurance premium is distributed according to the shipping insurance premium distribution data.

In some embodiments, the first event message and second event message are stored on the blockchain as transactions.

In some embodiments, the first event message is included in a plurality of event messages directed to an insurance provider and is communicated to the insurance provider through a blockchain node associated with the insurance provider, and wherein the shipping insurance premium is received in response to communicating the first event message to the insurance provider.

In some embodiments, the second event message is included in a plurality of event messages directed to the one or more service providers.

In some embodiments, the shipping data is received from a delivery services provider and proves that the purchase order is shipped by the delivery services provider.

In some embodiments, the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

In some embodiments, the shipping insurance order is received from a shipping insurance service platform or an electronic business platform, and wherein the shipping insurance order indicates one or more of items insured, an insurance premium, a declared value of the purchase order, or an insurance included for the purchase order.

In some embodiments, the consensus algorithm is one of proof of work (PoW), proof of stake (PoS), or practical Byzantine fault tolerance (PBFT).

In some embodiments, the one or more service providers include one or more of the service system, a shipping insurance service platform, or an insurance provider.

In some embodiments, the second one or more predetermined rules provide a shipping insurance premium distribution plan agreed upon by the service system, the shipping insurance service platform, or the insurance provider.

In some embodiments, the insurance premium is withheld by the service system in response to determining that the shipping insurance order is valid, and the insurance premium is distributed to the service system, the shipping insurance service platform, and the insurance provider according to the second one or more predetermined rules in response to determining that the distribution of the shipping insurance premium is legal.

In another embodiment, according to the invention, a computer-implemented method performed by a blockchain node of a blockchain network comprises: storing shipping data and shipping insurance order data associated with a purchase order on a blockchain based on initiating a consensus algorithm through a blockchain node associated with the computing system; determining, by executing a smart contract based on one or more predetermined rules and the shipping data, whether a shipping insurance order associated with the shipping insurance order data is valid; in response to determining that the shipping insurance order is valid, generating, by executing the smart contract, an event message dedicated to an insurance provider notifying that a shipping insurance of the purchase order is effective, wherein the smart contract invokes an event management function to periodically generate the first event message until an acknowledgement receipt feedback is received; storing the event message to a hardware cache managed by the computing system; sending the event message to a blockchain node associated with the insurance provider; and processing the event message in response to receiving a feedback message from the blockchain node associated with the insurance provider.

In some embodiments, the feedback message indicates that the event message is received by the blockchain node associated with the insurance provider, and the processing the event message comprises: storing the event message on the blockchain based on performing the consensus algorithm; and deleting the event message from the hardware cache.

In some embodiments, when the feedback message indicates that the event message is incorrectly received or not received within a predetermined period of time, the processing the event message comprises resending the event message to the blockchain node associated with the insurance provider. In some embodiments, the sending the event message is performed periodically until the feedback message is received.

In some embodiments, the event message is a first event message, the smart contract is a first smart contract, the feedback message is a first feedback message, and the method further comprises: receiving, from the blockchain node associated with the insurance provider, a second event message directed to one or more service providers, wherein the second event message notifies a distribution of a shipping insurance premium associated with the shipping insurance order to one or more service providers; sending a second feedback message to the blockchain node associated with the insurance provider indicating that the second event message is correctly received; determining, by executing a second smart contract based on second one or more predetermined rules, that the distribution of the shipping insurance premium is legal; storing the second event message on the blockchain based on the consensus algorithm; and sending the second event message to the one or more service providers.

In some embodiments, the method further comprises: receiving a shipping insurance premium distribution data from the blockchain node associated with the insurance provider in response to communicating the first event message to the insurance provider; and storing the shipping insurance premium distribution data on the blockchain based on the consensus algorithm.

In some embodiments, the one or more service providers include one or more of the service system, a shipping insurance service platform, or an insurance provider. In some embodiments, the second one or more predetermined rules provide an insurance premium distribution plan agreed upon by the service system, the shipping insurance service platform, or the shipping insurance provider.

In some embodiments, the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

In some embodiments, the shipping insurance order indicates one or more of items insured, an insurance premium, a declared value of the purchase order, or an insurance included for the purchase order.

It is appreciated that methods in accordance with this specification may include any combination of the aspects and features described herein. That is, methods in accordance with this specification are not limited to the combinations of aspects and features specifically described herein, but also include any combination of the aspects and features provided.

The details of one or more embodiments of this specification are set forth in the accompanying drawings and the description below. Other features and advantages of this specification will be apparent from the description and drawings, and from the claims.

### BRIEF DESCRIPTION OF THE DRAWINGS

FIG. 1 is a diagram illustrating an example of an environment that can be used to execute embodiments of this specification.
FIG. 2 is a diagram illustrating an example of an architecture in accordance with embodiments of this specification.
FIG. 3 is a swim-lane diagram illustrating an example of a message flow in accordance with embodiments of this specification.
FIG. 4 is a diagram illustrating an example of an internal system of a service provider in accordance with embodiments of this specification.
FIG. 5 is a relational diagram illustrating an example of relationships between sub-models of shipping insurance data model in accordance with embodiments of this specification.
FIG. 6 is a diagram illustrating an example of a process of providing message feedback in accordance with embodiments of this specification.
FIG. 7 depicts an example of system in accordance with embodiments of this specification.
FIG. 8 depicts an example of a process that can be executed in accordance with embodiments of this specification.
FIG. 9 depicts an example of modules of an apparatus in accordance with embodiments of this specification.
FIG. 10 depicts another example of a process that can be executed in accordance with embodiments of this specification.
FIG. 11 depicts another example of modules of an apparatus in accordance with embodiments of this specification.

Like reference numbers and designations in the various drawings indicate like elements.

### DETAILED DESCRIPTION

This specification describes technologies for blockchain-based message services. These technologies generally involve receiving shipping data and shipping insurance order data associated with a purchase order; determining, by executing a first smart contract based on first one or more predetermined rules and the shipping data, whether a shipping insurance order corresponding to the shipping insurance order data is valid; in response to determining that the shipping insurance order is valid, initiating a consensus algorithm to record the shipping data and the shipping insurance order data on a blockchain; generating, by executing the first smart contract, a first event message including a notification that a shipping insurance of the purchase order is effective; receiving shipping insurance premium distribution data indicating a distribution of shipping insurance premium associated with the shipping insurance order to one or more service providers; determining, by executing a second smart contract based on second one or more predetermined rules, that the distribution of the shipping insurance premium is legal; initiating the consensus algorithm of the blockchain network to record the shipping insurance premium distribution data on a blockchain; and generating, by executing the second smart contract, a second event message notifying that the shipping insurance premium is distributed according to the shipping insurance premium distribution data.

This specification also describes technologies for storage management based on message feedback. These technologies generally involve storing shipping data and shipping insurance order data associated with a purchase order on a blockchain based on initiating a consensus algorithm through a blockchain node associated with the computing system; determining, by executing a smart contract based on one or more predetermined rules and the shipping data, whether a shipping insurance order associated with the shipping insurance order data is valid; in response to determining that the shipping insurance order is valid, generating, by executing the smart contract, an event message dedicated to an insurance provider notifying that a shipping insurance of the purchase order is effective; storing the event message to a hardware cache managed by the computing system; sending the event message to a blockchain node associated with the insurance provider; and processing the event message in response to receiving a feedback message from the blockchain node associated with the insurance provider.

The techniques described in this specification produce several technical effects. In some embodiments, the entire lifecycle of shipping insurance services (e.g., insurance order generation and insurance premium distribution) can be recorded on a blockchain. For example, the blockchain can store an immutable and transparent chain-of-record that links the data associated with the same purchase order. Because the records on the blockchain are recorded through consensus, they can be easily verified and trusted by entities that have access to the blockchain. As compared to peer-to-peer communications, the use of blockchain technology improves efficiency of data processing when the data are generated by different entities.

In some embodiments, the shipping insurance data can be time sensitive. The disclosed smart contract technology allows quick verification of the authenticity and validity of shipping information, order information, and shipping insurance order. The smart contract technology further allows generation of different types of event messages for different services or service providers associated with the insuring process. The event messages can be used to quickly notify the service providers important insurance events, especially when the total data volume is high. By selectively generating different types of event messages, services related to important events can be more easily associated with and identified by corresponding service providers. As such, shipping insurance policies can quickly take effect and insurance premiums can be timely distributed among the service providers.

In some embodiments, a feedback mechanism is provided to strategically manage data retransmissions due to potential packet loss. As a result, time-sensitive event messages can be released from cache storage after receiving positive feedback on data transmission. The time period that valuable cache storage space is occupied can be reduced and storage usage efficiency can be improved. Moreover, with decreased volume of data retransmissions, consumptions of communication bandwidth inside the blockchain network can be reduced. The feedback mechanism is especially suitable for blockchain networks with a large quantity of nodes, where the transmission routes of data packets can be relatively long, which increase the chances of packet loss.

In some embodiments, privacy of the insurance data can further be protected based on using the trusted execution environment (TEE) technology. The TEE serves as an isolated and trusted computing environment that can be integrated in the blockchain nodes of the blockchain network. The TEE processes plaintext of the insurance related data and outputs cyphertext of the data. Using the TEE technology, the data can be easily updated inside the TEE without revealing the actual updates. Moreover, the output of the TEE is encrypted and trusted by the blockchain nodes of the blockchain network, hence can be efficiently stored to the blockchain after the blockchain nodes reach consensus.

To provide further context for embodiments of this specification, and as introduced above, distributed ledger systems (DLSs), which can also be referred to as consensus networks (e.g., made up of peer-to-peer nodes), and blockchain networks, enable participating entities to securely, and immutably conduct transactions, and store data. Although the term blockchain is generally associated with particular networks, and/or use cases, blockchain is used herein to generally refer to a DLS without reference to any particular use case.

A blockchain is a data structure that stores transactions in a way that the transactions are immutable. Thus, transactions recorded on a blockchain are reliable and trustworthy. A blockchain includes one or more blocks. Each block in the chain is linked to a previous block immediately before it in the chain by including a cryptographic hash of the previous block. Each block also includes a timestamp, its own cryptographic hash, and one or more transactions. The transactions, which have already been verified by the nodes of the blockchain network, are hashed and encoded into a Merkle tree. A Merkle tree is a data structure in which data at the leaf nodes of the tree is hashed, and all hashes in each branch of the tree are concatenated at the root of the branch. This process continues up the tree to the root of the entire tree, which stores a hash that is representative of all data in the tree. A hash purporting to be of a transaction stored in the tree can be quickly verified by determining whether it is consistent with the structure of the tree.

Whereas a blockchain is a decentralized or at least partially decentralized data structure for storing transactions, a blockchain network is a network of computing nodes that manage, update, and maintain one or more blockchains by broadcasting, verifying and validating transactions, etc. As introduced above, a blockchain network can be provided as a public blockchain network, a private blockchain network, or a consortium blockchain network. Embodiments of this specification are described in further detail herein with reference to a consortium blockchain network. It is contemplated, however, that embodiments of this specification can be realized in any appropriate type of blockchain network.

In general, a consortium blockchain network is private among the participating entities. In a consortium blockchain network, the consensus process is controlled by an authorized set of nodes, which can be referred to as consensus nodes, one or more consensus nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network.

In some examples, within a consortium blockchain network, a global blockchain is provided as a blockchain that is replicated across all nodes. That is, all consensus nodes are in perfect state consensus with respect to the global blockchain. To achieve consensus (e.g., agreement to the addition of a block to a blockchain), a consensus protocol is implemented within the consortium blockchain network. For example, the consortium blockchain network can implement a practical Byzantine fault tolerance (PBFT) consensus, described in further detail below.

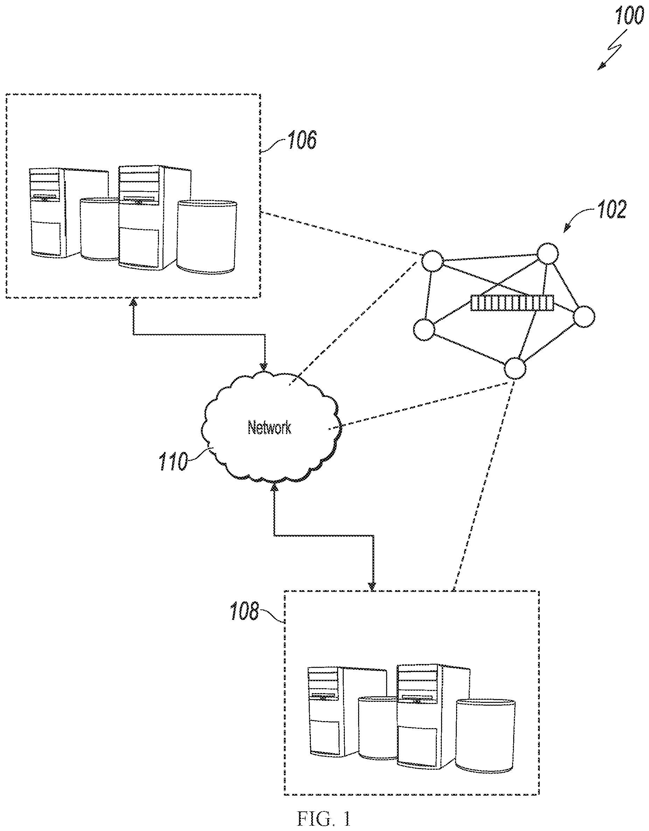

FIG. 1 is a diagram illustrating an example of an environment 100 that can be used to execute embodiments of this specification. In some examples, the environment 100 enables entities to participate in a consortium blockchain network 102. The environment 100 includes computing systems 106, 108, and a network 110. In some examples, the network 110 includes a local area network (LAN), wide area network (WAN), the Internet, or a combination thereof, and connects web sites, user devices (e.g., computing devices), and back-end systems. In some examples, the network 110 can be accessed over a wired and/or a wireless communications link. In some examples, the network 110 enables communication with, and within the consortium blockchain network 102. In general, the network 110 represents one or more communication networks. In some cases, the computing systems 106, 108 can be nodes of a cloud computing system (not shown), or each of the computing systems106, 108 can be a separate cloud computing system including a number of computers interconnected by a network and functioning as a distributed processing system.

In the depicted example, the computing systems 106, 108 can each include any appropriate computing device that enables participation as a node in the consortium blockchain network 102. Examples of computing devices include, without limitation, a server, a desktop computer, a laptop computer, a tablet computing device, and a smartphone. In some examples, the computing systems 106, 108 host one or more computer-implemented services for interacting with the consortium blockchain network 102. For example, the computing system 106 can host computer-implemented services of a first entity (e.g., user A), such as a transaction management system that the first entity uses to manage its transactions with one or more other entities (e.g., other users). The computing system 108 can host computer-implemented services of a second entity (e.g., user B), such as a transaction management system that the second entity uses to manage its transactions with one or more other entities (e.g., other users). In the example of FIG. 1, the consortium blockchain network 102 is represented as a peer-to-peer network of nodes, and the computing systems 106, 108 provide nodes of the first entity, and second entity respectively, which participate in the consortium blockchain network 102.

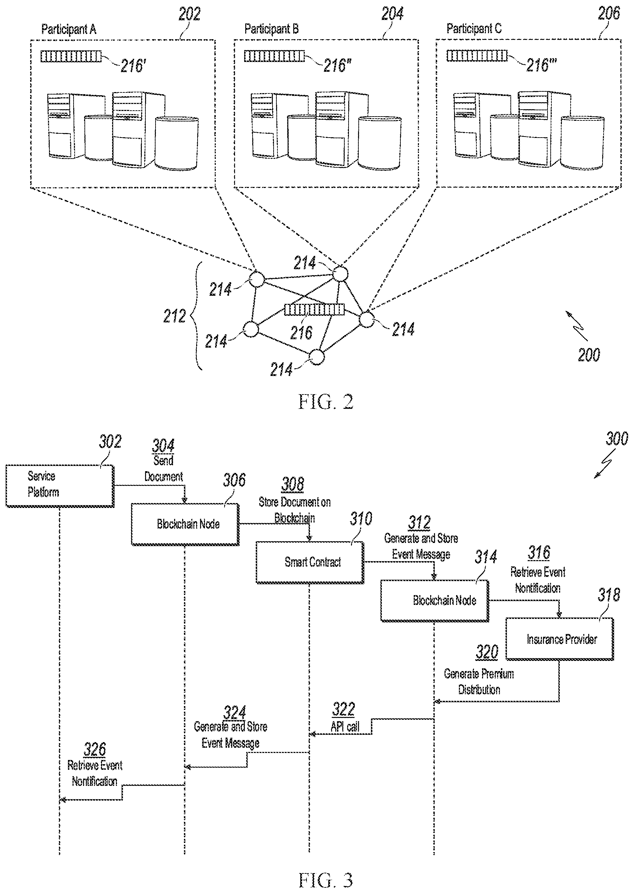

FIG. 2 depicts an example of an architecture 200 in accordance with embodiments of this specification. The example conceptual architecture 200 includes participant systems 202, 204, 206 that correspond to Participant A, Participant B, and Participant C, respectively. Each participant (e.g., user, enterprise) participates in a blockchain network 212 provided as a peer-to-peer network including a plurality of nodes 214, at least some of which immutably record information in a blockchain 216. Although a single blockchain 216 is schematically depicted within the blockchain network 212, multiple copies of the blockchain 216 are provided, and are maintained across the blockchain network 212, as described in further detail herein.

In the depicted example, each participant system 202, 204, 206 is provided by, or on behalf of Participant A, Participant B, and Participant C, respectively, and functions as a respective node 214 within the blockchain network. As used herein, a node generally refers to an individual system (e.g., computer, server) that is connected to the blockchain network 212, and enables a respective participant to participate in the blockchain network. In the example of FIG. 2, a participant corresponds to each node 214. It is contemplated, however, that a participant can operate multiple nodes 214 within the blockchain network 212, and/or multiple participants can share a node 214. In some examples, the participant systems 202, 204, 206 communicate with, or through the blockchain network 212 using a protocol (e.g., hypertext transfer protocol secure (HTTPS)), and/or using remote procedure calls (RPCs).

Nodes 214 can have varying degrees of participation within the blockchain network 212. For example, some nodes 214 can participate in the consensus process (e.g., as miner nodes that add blocks to the blockchain 216), while other nodes 214 do not participate in the consensus process. As another example, some nodes 214 store a complete copy of the blockchain 216, while other nodes 214 only store copies of portions of the blockchain 216. For example, data access privileges can limit the blockchain data that a respective participant stores within its respective system. In the example of FIG. 2, the participant systems 202, 204, and 206 store respective, complete copies 216′, 216ʺ, and 216‴ of the blockchain 216.

A blockchain (e.g., the blockchain 216 of FIG. 2) is made up of a chain of blocks, each block storing data. Examples of data include transaction data representative of a transaction between two or more participants. While transactions are used herein by way of non-limiting example, it is contemplated that any appropriate data can be stored in a blockchain (e.g., documents, images, videos, audio). Examples of a transaction can include, without limitation, exchanges of something of value (e.g., assets, products, services, currency). The transaction data is immutably stored within the blockchain. That is, the transaction data cannot be changed.

Before storing in a block, the transaction data is hashed. Hashing is a process of transforming the transaction data (provided as string data) into a fixed-length hash value (also provided as string data). It is not possible to un-hash the hash value to obtain the transaction data. Hashing ensures that even a slight change in the transaction data results in a completely different hash value. Further, and as noted above, the hash value is of fixed length. That is, no matter the size of the transaction data the length of the hash value is fixed. Hashing includes processing the transaction data through a hash function to generate the hash value. An example of a hash function includes, without limitation, the secure hash algorithm (SHA)-256, which outputs 256-bit hash values.

Transaction data of multiple transactions are hashed and stored in a block. For example, hash values of two transactions are provided, and are themselves hashed to provide another hash. This process is repeated until, for all transactions to be stored in a block, a single hash value is provided. This hash value is referred to as a Merkle root hash, and is stored in a header of the block. A change in any of the transactions will result in change in its hash value, and ultimately, a change in the Merkle root hash.

Blocks are added to the blockchain through a consensus protocol. Multiple nodes within the blockchain network participate in the consensus protocol, and perform work to have a block added to the blockchain. Such nodes are referred to as consensus nodes. PBFT, introduced above, is used as a non-limiting example of a consensus protocol. The consensus nodes execute the consensus protocol to add transactions to the blockchain, and update the overall state of the blockchain network.

In further detail, the consensus node generates a block header, hashes all of the transactions in the block, and combines the hash value in pairs to generate further hash values until a single hash value is provided for all transactions in the block (the Merkle root hash). This hash is added to the block header. The consensus node also determines the hash value of the most recent block in the blockchain (i.e., the last block added to the blockchain). The consensus node also adds a nonce value, and a timestamp to the block header.

In general, PBFT provides a practical Byzantine state machine replication that tolerates Byzantine faults (e.g., malfunctioning nodes, malicious nodes). This is achieved in PBFT by assuming that faults will occur (e.g., assuming the existence of independent node failures, and/or manipulated messages sent by consensus nodes). In PBFT, the consensus nodes are provided in a sequence that includes a primary consensus node, and backup consensus nodes. The primary consensus node is periodically changed. Transactions are added to the blockchain by all consensus nodes within the blockchain network reaching an agreement as to the world state of the blockchain network. In this process, messages are transmitted between consensus nodes, and each consensus nodes proves that a message is received from a specified peer node, and verifies that the message was not modified during transmission.

In PBFT, the consensus protocol is provided in multiple phases with all consensus nodes beginning in the same state. To begin, a client sends a request to the primary consensus node to invoke a service operation (e.g., execute a transaction within the blockchain network). In response to receiving the request, the primary consensus node multicasts the request to the backup consensus nodes. The backup consensus nodes execute the request, and each sends a reply to the client. The client waits until a threshold number of replies are received. In some examples, the client waits for f+1 replies to be received, where f is the maximum number of faulty consensus nodes that can be tolerated within the blockchain network. The final result is that a sufficient number of consensus nodes come to an agreement on the order of the record that is to be added to the blockchain, and the record is either accepted, or rejected.

In some blockchain networks, cryptography is implemented to maintain privacy of transactions. For example, if two nodes want to keep a transaction private, such that other nodes in the blockchain network cannot discern details of the transaction, the nodes can encrypt the transaction data. An example of cryptography includes, without limitation, symmetric encryption, and asymmetric encryption. Symmetric encryption refers to an encryption process that uses a single key for both encryption (generating cyphertext from plaintext), and decryption (generating plaintext from cyphertext). In symmetric encryption, the same key is available to multiple nodes, so each node can en-/de-crypt transaction data.

Asymmetric encryption uses keys pairs that each include a private key, and a public key, the private key being known only to a respective node, and the public key being known to any or all other nodes in the blockchain network. A node can use the public key of another node to encrypt data, and the encrypted data can be decrypted using other node's private key. For example, and referring again to FIG. 2, Participant A can use Participant B's public key to encrypt data, and send the encrypted data to Participant B. Participant B can use its private key to decrypt the encrypted data (cyphertext) and extract the original data (plaintext). Messages encrypted with a node's public key can only be decrypted using the node's private key.

Asymmetric encryption is used to provide digital signatures, which enables participants in a transaction to confirm other participants in the transaction, as well as the validity of the transaction. For example, a node can digitally sign a message, and another node can confirm that the message was sent by the node based on the digital signature of Participant A. Digital signatures can also be used to ensure that messages are not tampered with in transit. For example, and again referencing FIG. 2, Participant A is to send a message to Participant B. Participant A generates a hash of the message, and then, using its private key, encrypts the hash to provide a digital signature as the encrypted hash. Participant A appends the digital signature to the message, and sends the message with digital signature to Participant B. Participant B decrypts the digital signature using the public key of Participant A, and extracts the hash. Participant B hashes the message and compares the hashes. If the hashes are same, Participant B can confirm that the message was indeed from Participant A, and was not tampered with.

In some embodiments, nodes of the blockchain network, and/or nodes that communicate with the blockchain network can operate using trusted execution environments (TEEs). At a high-level, a TEE is a trusted environment within hardware (one or more processors, memory) that is isolated from the hardware's operating environment (e.g., operating system (OS), basic input/output system (BIOS)). In further detail, a TEE is a separate, secure area of a processor that ensures the confidentiality, and integrity of code executing, and data loaded within the main processor. Within a processor, the TEE runs in parallel with the OS. At least portions of so-called trusted applications (TAs) execute within the TEE, and have access to the processor and memory. Through the TEE, the TAs are protected from other applications running in the main OS. Further, the TEE cryptographically isolates TAs from one another inside the TEE.

An example of a TEE includes Software Guard Extensions (SGX) provided by Intel Corporation of Santa Clara, California, United States. Although SGX is discussed herein by way of example, it is contemplated that embodiments of this specification can be realized using any appropriate TEE.

SGX provides a hardware-based TEE. In SGX, the trusted hardware is the die of the central processing until (CPU), and a portion of physical memory is isolated to protect select code and data. The isolated portions of memory are referred to as enclaves. More particularly, an enclave is provided as an enclave page cache (EPC) in memory and is mapped to an application address space. The memory (e.g., DRAM) includes a preserved random memory (PRM) for SGX. The PRM is a continuous memory space in the lowest BIOS level and cannot be accessed by any software. Each EPC is a memory set (e.g., 4 KB) that is allocated by an OS to load application data and code in the PRM. EPC metadata (EPCM) is the entry address for respective EPCs and ensures that each EPC can only be shared by one enclave. That is, a single enclave can use multiple EPCs, while an EPC is dedicated to a single enclave.

During execution of a TA, the processor operates in a so-called enclave mode when accessing data stored in an enclave. Operation in the enclave mode enforces an extra hardware check to each memory access. In SGX, a TA is compiled to a trusted portion, and an untrusted portion. The trusted portion is inaccessible by, for example, OS, BIOS, privileged system code, virtual machine manager (VMM), system management mode (SMM), and the like. In operation, the TA runs and creates an enclave within the PRM of the memory. A trusted function executed by the trusted portion within the enclave is called by the untrusted portion, and code executing within the enclave sees the data as plaintext data (unencrypted), and external access to the data is denied. The trusted portion provides an encrypted response to the call, and the TA continues to execute.

An attestation process can be performed to verify that expected code (e.g., the trusted portion of the TA) is securely executing within the SGX-provided TEE. In general, the attestation process includes a TA receiving an attestation request from a challenger (e.g., another node in the blockchain network, a key management system (KMS) of the blockchain network). In response, the TA requests that its enclave produce a remote-attestation, also referred to as a quote. Producing the remote-attestation includes a local-attestation being sent from the enclave to a so-called quoting enclave, which verifies the local-attestation, and converts the local-attestation into the remote-attestation by signing the local-attestation using an asymmetric attestation key. The remote-attestation (quote) is provided to the challenger (e.g., KMS of the blockchain network).

The challenger uses an attestation verification service to verify the remote-attestation. For SGX, Intel provides the Intel Attestation Service (IAS), which receives the remote-attestation from the challenger, and verifies the remote-attestation. More particularly, the IAS processes the remote-attestation, and provides a report (e.g., attestation verification report (AVR)), which indicates whether the remote-attestation is verified. If not verified, an error can be indicated. If verified (the expected code is securely executing in the TEE), the challenger can start, or continue interactions with the TA. For example, in response to the verification, the KMS (as challenger) can issue asymmetric encryption keys (e.g., a public-key and private-key pair) to the node executing the TEE (e.g., through a key exchange process, such as elliptical curve Diffie-Hellman (ECDH)) to enable the node to securely communicate with other nodes, and/or clients. Additional details of the TEE technology are described in, e.g., PCT application PCT/CN2019/081180, filed on April 3, 2019.

FIG. 3 is a swim-lane diagram illustrating an example of a message flow 300 in accordance with embodiments of this specification. At a high-level, the message flow 300 is communicated downstream from a shipping insurance service platform 302, through a consortium blockchain network, to an insurance provider 318, and upstream back to the service platform 302. The service platform 302 can provide interfaces and data services to participants involved in the online order and associated shipping insurance services. Such service providers can include online sellers or e-commerce platforms (e.g., ALIBABA, EBAY, or AMAZON), delivery services providers (e.g., FEDEX, DHL, or SFEXPRESS), shipping insurance brokers, the insurance provider 318, etc. The data services can be based on blockchain technology implemented on the consortium blockchain network. The consortium blockchain network can include nodes owned by one or more of the service platform 302 and the other service providers.

In some embodiments, the service platform 302 can serve as a collector and facilitator of data provided by the service providers. The data can be provided in shipping insurance related documents, including purchase order documents, logistics documents (or shipping documents), and/or shipping insurance order documents. The purchase order documents can be provided by the e-commerce platform to the service platform 302. In some examples, the purchase order can be a credit insurance order. In a credit insurance order, the monetary amount of the order can be paid for by a buyer when the order is placed. However, the payment is withheld by the e-commerce platform and not released to the seller until delivery of the order is confirmed or otherwise fulfilled.

In some embodiments, the purchase order can also include a shipping insurance payment selected to be paid for by the buyer. In some examples, the shipping insurance payment is included in a purchase order and can be treated as a shipping insurance order. In some examples, a shipping insurance order document separate from the purchase order document can be created and provided by a shipping insurance broker or an insurer. In some embodiments, the shipping document can be provided to the service platform 302 by the delivery services provider.

At 304, the service platform 302 can send the shipping insurance related documents to a blockchain node 306 associated with the service platform 302. The blockchain node 306 can be a node of the blockchain network.

In some embodiments, part or all shipping insurance related documents can be encrypted by encryption keys to protect privacy of the document owners. The document owners can determine which users of the service platform 302 can be allowed to access the plaintext version of the documents and request a system admin of the service platform 302 to set access permissions of the documents. In some embodiments, the document owners can provide a list of users that are permitted to access the plaintext version of the documents besides the document owners themselves. For example, for a shipping document, the list of users permitted to view the plaintext document can be the service platform 302 and the insurance provider 318.

In some examples, the encryption key used to encrypt the documents can be a symmetric key. To set access permission for a user, the system admin can encrypt the symmetric key by using the public key of the user. The encrypted version of the symmetric key can be stored in a smart contract. The users that have access of the document can retrieve the encrypted version of the symmetric key from the smart contract and use its corresponding private key to decrypt the encrypted version of the symmetric key. After the symmetric key is decrypted, the user can use it to decrypt the encrypted document.

The service platform 302 includes an application program interface (API) layer that comprises multiple APIs available to be called by the users to provide services associated with shipping insurances. Those APIs can be accessed through a software application (APP) from a computing device (e.g., a smart phone). In some examples, the APIs can interface with services including one or more of shipping insurance related document registration services, document data update services, query services, insurance history generation services, premium history generation services, premium distribution history services, etc.

At 308, the blockchain node can invoke a smart contract 310 to store the documents to a blockchain as transactions. The transactions added on the blockchain can be verified and agreed upon by blockchain nodes in the blockchain network through consensus based on a consensus algorithm. Example consensus algorithms can include proof of work (PoW), proof of stake (PoS), PBFT, etc. Once added, the transactions become immutable and can be verifiable by any of the blockchain nodes of the blockchain network.

At 312, the smart contract 310 can be executed to generate and store event messages. The event messages can include document events indicating that new documents are recorded on the blockchain and insurance order events indicating that new insurance orders are effective. The smart contract 310 can also be stored on the blockchain as a special type of transaction. In some embodiments, the smart contract 310 can be invoked by different nodes of the blockchain network through API calls to perform different functions. Those functions can include blockchain storage, document status management, insurance order review, and/or event management. For example, blockchain nodes associated with the e-commerce platform and the delivery services provider can make API calls to invoke the blockchain storage function. The blockchain storage function can be invoked to store purchase order documents and shipping insurance order documents on the blockchain. The insurance order review function can be invoked to verify and approve the shipping insurance orders, in response to document events that new documents are added to the blockchain.

In some embodiments, the service platform 302 can also make an API call to invoke the event management function to generate or perform other management functions of the event messages. For example, in response to new documents recorded on the blockchain, the event management function can generate a corresponding document event. In response to the approval of the insurance order through the insurance order review function, the event management function can generate the insurance order event indicating that the shipping insurance order is effective.

In some embodiments, the event messages can be used to mark or notify events associated with the shipping insurance services that need timely responses. By generating the event messages, the parties involved in the shipping insurance services can more easily identify time-sensitive event messages from a large amount of blockchain data.

In some embodiments, the service platform 302 may invoke the insurance order review function to review whether the documents satisfy one or more predetermined rules. For example, to generate an event message for the insurance provider 318 indicating that the shipping insurance order is effective, the one or more predetermined rules can include a coverage limit of a declared value of the purchase order, items covered by the shipping insurance, an insurance limit of the purchase order, and/or a premium distribution plan. Correspondingly, the shipping insurance order is effective after the insurance order review function is invoked to verify that the purchase order has a declared value under the coverage limit, items covered by the shipping insurance are insurable, and the insured amount of the purchase order is under an insurance limit.

In some embodiments, the event messages can be stored as an event log on the blockchain. To obtain event messages stored in the event log, the blockchain nodes associated with different service providers can retrieve the event log periodically or based on needs. In some embodiments, after the event messages associated with a service are generated, they can be automatically sent to other blockchain nodes for consensus. After the event messages are stored on the blockchain, they can be sent to or retrieved by their dedicated service providers. For example, after the event message indicating that the shipping insurance order is effective is stored on the blockchain, it can be retrieved by the insurance provider 318 at 316 through the blockchain node 314, or sent by the blockchain node 314 to the insurance provider 318.

At 320, the insurance provider 318 can generate a premium distribution agreed to by the service providers and send it to the blockchain node to be stored on the blockchain. The blockchain node 314 can make an API call at 322 to invoke the smart contract 310 to execute the insurance order review function and verify whether the premium distribution complies to the premium distribution plan agreed upon by the service providers. If yes, the blockchain storage function of the smart contract 310 can be invoked to store the premium distribution to the blockchain.

At 324, the smart contract 310 can be executed to generate and store a premium distribution event message. In some embodiments, the premium distribution event message can be generated by invoking the event management function. After the premium distribution event message is generated, it can be sent to other blockchain nodes for consensus. After the premium distribution event message is stored on the blockchain, it can be retrieved by the service platform 302 at 326, such that the service platform 302 can notify the e-commerce platform to distribute the insurance premium accordingly to the entitled service providers.

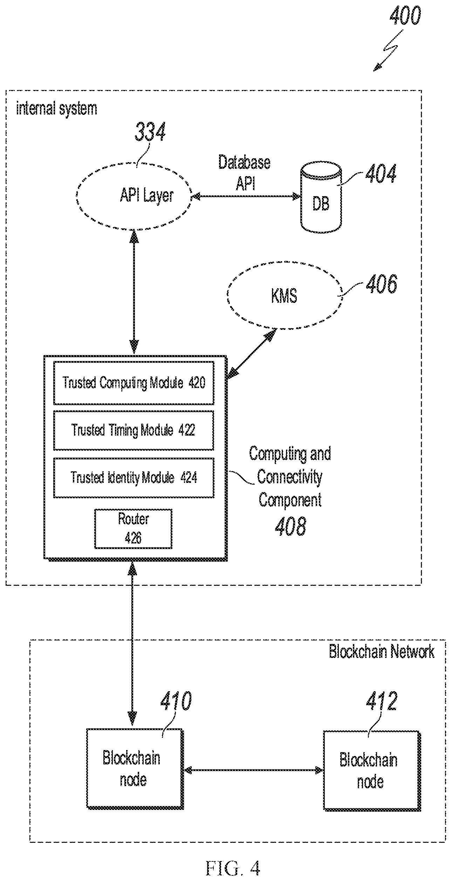

FIG. 4 is a diagram illustrating an example of an internal system 400 of a service provider of shipping insurance services in accordance with embodiments of this specification. The service provider can be an e-commerce platform, a delivery services provider, a shipping insurance broker, or an insurance provider. At a high-level, the internal system 400 can include an APP 402, a database 404, a key management system (KMS) 406, and a computing and connectivity component 408. In some embodiments, the internal system 400 can include less or more components. The internal system 400 is connected to a blockchain network 409 that includes a plurality of blockchain nodes (only blockchain node 410 and blockchain node 412 are depicted in FIG. 4 for illustration purposes, it is understood that the blockchain network 409 can include many additional blockchain nodes). For example, the blockchain nodes 410 and 412 can be the blockchain nodes 306 and 314 depicted in FIG. 3 that respectively serve the service platform 302 and the insurance provider.

The APP 402 can be a software program for carrying the APIs of the service platform to provide data services associated with shipping insurances. The APP 402 can be an interface between users of the service platform and the internal system 400 of the service platform. For example, the APP 402 can be used to receive input including user profile information, login information, shipping insurance related service data, etc. In some embodiments, data related to shipping insurance services can be stored in a database 404. The database 404 can include any memory or database module and can take the form of volatile or non-volatile memory, including, without limitation, magnetic media, optical media, random access memory (RAM), read-only memory (ROM), removable media, or any other suitable local or remote memory component. The database 404 can store various objects or data, including classes, frameworks, applications, backup data, business objects, jobs, web pages, web page templates, database tables, repositories storing business or dynamic data, and any other appropriate information including any parameters, variables, algorithms, instructions, rules, constraints, or references thereto associated with the purposes of the APP 402 or the internal system 401.

Example data can include order data, logistics data, tracking data, insurance payment data, premium data, templates, and encryption keys, etc. Additionally, the database 404 can include any other appropriate data, such as VPN applications, firmware logs and policies, firewall policies, a security or access log, print or other reporting files, as well as others. In some examples, the APP 402 can retrieve data from the database 404 through a database API.

The APP 402 can communicate information related to shipping insurance services with a computing and connectivity component 408. In some embodiments, the computing and connectivity component 408 can include a trusted computing module 420, a trusted timing module 422, and a trusted identity module 424. The trusted computing module 420 can include one or more processors to execute instructions provided by a software development kit (SDK). Example instructions can include performing encryption, generating digital signatures and/or ZKPs, or other applicable proofs. In some embodiments, the one or more data processors can have a TEE that is isolated from the one or more processors' operating system and configured to provide enhanced confidentiality and integrity of code executing, and data loaded within, the one or more data processors.

In some embodiments, the trusted computing module 420 can be configured to record data associated with shipping insurance services in compliance with privacy laws. For example, the trusted computing module 420 can generate a hash value of the record (i.e., a transaction hash), and adds a block that includes the record and the hash value to the blockchain associated with the blockchain network 409. As discussed earlier, a document can include dynamic data and unmodifiable blockchain data that are separately stored in a smart contract data cache and a blockchain database. For a same document or smart contract transaction, the transaction hash of the dynamic data can be stored with the corresponding blockchain data under the same data structure on the blockchain, so that the dynamic data and the unmodifiable blockchain data can be linked. Alternatively or additionally, the transaction hash of the blockchain data can be stored with the corresponding dynamic data in the smart contract data cache so that the data can be linked.

In some embodiments, the trusted computing module 420 can be configured to provide a verified record of the steps/operations performed by the APP 402 in response to a request for the verified record associated with a document for shipping insurance services. The trusted computing module 420 can also provide a verified time stamp generated by a trusted timing module 422, a verified identity generated by a trusted identity module 424, and/or the computation result associated with each step/operation of the steps/operations performed by the APP 402.

In some embodiments, the encryption keys used to perform encryption, and generate digital signatures and proofs can be provided by a KMS 406 to the trusted computing module 420. In some embodiments, the KMS 406 can generate, store, and manage encryption keys. In some embodiments, KMS 406 includes a secure application environment implemented using the TEE technology (e.g., Intel SGX). One or more software programs or libraries can be executed by the TEE.

In some embodiments, the trusted timing module 422 can be configured to generate time stamps based on national standard timing information (e.g., Greenwich Mean Time (GMT), UTC), or timing information obtained from a global positioning system. In some embodiments, the trusted timing module 422 can synchronize the time it maintains with the global time adopted by the blockchain nodes of the blockchain network 409 to ensure accuracy of the time stamps stored on the blockchain.

In some embodiments, the trusted timing module 422 can be configured to generate time stamps associated with different users using different standard times in different regions. For example, the trusted timing module 422 can generate time stamps associated with an e-commerce platform using a first standard time recognized by an international delivery services provider, and to generate time stamps associated with an insurance provider using a second standard time recognized by a domestic insurance service platform associated with the insurance provider, in which the e-commerce platform and the insurance provider reside in different regions having different logistics systems.

The trusted identity module 424 can be configured to verify an identity of a service platform user based on one or more of unique IDs associated with the user. In some embodiments, the unique IDs can include at least one of the following: (i) a mobile phone number, (ii) a credit card number, (iii) a user ID associated with an online payment system, (iv) a user ID associated with an online shopping account, (v) a user ID associated with a music streaming or downloading account, (vi) a user IDS associated with a movie streaming or downloading account, (vii) a user ID associated with a messaging or chat account, (viii) a user ID associated with an online banking account, (ix) a user ID associated with a ride hailing service, (x) a user ID associated with an online food ordering service, (xi) a social security number, (xii) a driver's license number, (xiii) a passport number, (xiv) a user ID associated with an online gaming service, (xv) an ID issued by a government entity, (xvi) one or more fingerprints, (xvii) one or more voice prints, or (xviii) iris information.

In some embodiments, the unique IDs can also include a decentralized identifier of the user. The decentralized identifier can include a universal resource locator (URL) scheme identifier, an identifier for a decentralized identifier method, and a decentralized identifier method-specific identifier. The decentralized identifier can point to a corresponding decentralized identifier document, which can include descriptive text in a preset format (e.g., JSON-LD) about the decentralized identifier and the owner of the decentralized identifier. The decentralized identifier can serve as a uniform resource identifier (URI) for locating the decentralized identifier document. The decentralized identifier document can include various properties such as contexts, decentralized identifier subject, public keys, authentication, authorization and delegation, service endpoints, creation, updates, proof, and extensibility. The decentralized identifier document can define or point to resources defining a plurality of operations that can be performed with respect to the decentralized identifier. In the examples described in this specification, the decentralized identifiers comply with the standards specified by the World Wide Web Consortium (W3C). However, other decentralized identifiers can also be used.

In some embodiments, the unique ID can be used to uniquely identity an insurance applicant or a shipping insurance order. The unique ID can be embedded by the service provider to the shipping insurance data associated with the insurance applicant, before the data is recorded on the blockchain. The insurance provider or a regulator can trace the shipping insurance data associated with the insurance applicant based on recovering the embedded unique ID. As such, it can be ensured that the data for validating the shipping insurance order belongs to the same insurance applicant and are completed for review. Additional information about unique IDs can be found in applications PCT/CN2019/095299, filed on July 9, 2019, PCT/CN2019/103780, filed on August 30, 2019, and CN201910963431.0, filed on October 11, 2019.

In some embodiments, the trusted identity module 424 can be configured to verify different insurance applicants residing in different regions having different insurance policy systems by using different identifiers. For example, the trusted identity module 424 can be configured to verify the identity of a first insurance applicant using at least one of a first set of identifiers recognized by a first insurance policy system associated with the first insurance applicant, and to verify the identity of a second insurance applicant using at least one of a second set of identifiers recognized by a second insurance policy system associated with the second insurance applicant, in which the first and second insurance applicants reside in different regions having different insurance policy systems.

In some examples, the computing and connectivity component 408 can also include a router 426 that can route information processed by the one or more processors to a blockchain node 410 in the blockchain network 409 communicably coupled to the internal system 401. As discussed earlier, the blockchain node 410 can be a cloud node that can sign and/or verify messages, and communicate with other blockchain nodes. The blockchain node 410 can also be a consensus node that participates in a consensus procedure in the blockchain network 409. In some embodiments, the communications inside and between the internal system 401 and blockchain network 409 can be performed based on a secure communication protocol such as the hypertext transfer protocol secure (HTTPS) or transport layer security (TLS). For example, the functions performed by the blockchain node 410 can be defined in a smart contract, in which mining nodes of the blockchain network execute the functions in the smart contract and consensus full nodes of the blockchain network verify the transactions.

The time, identity, and content carried by shipping insurance data recorded on the blockchain can be trusted. The blockchain enables the APP 402 that provides the shipping insurance services to preserve verified records of information (e.g., who, what, and when) about events that occur during each of multiple steps or critical time points of the services. The records of information are preserved in ways that comply (or are more compliant compared to previous systems) with predetermined rules. For example, when the order is insured by a Chinese insurance provider, the predetermined rule can be the Insurance Law of the People's Republic of China.

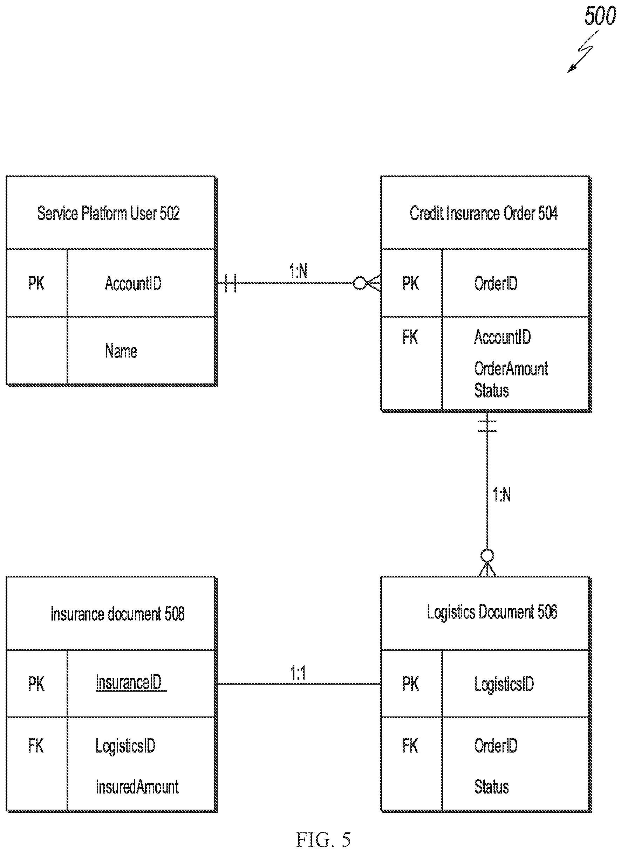

FIG. 5 is a relational diagram illustrating an example of relationships between sub-models of a shipping insurance data model 500 in accordance with embodiments of this specification. The shipping insurance data model 500 can be a computer-implemented model used by one or more APPs of the service platform, such as the service platform discussed in the descriptions of FIGS. 3 and 4, to process shipping insurance related data. At a high-level, the model 500 can have sub-models including a service platform user sub-model 502, a credit insurance order sub-model 504, a logistics document sub-model 506, and an insurance document 508 sub-model.

The service platform user sub-model 502 can be used to model properties of user accounts permitted to access the services provided by the service platform. Such user accounts can be associated with users such as shipping insurance applicants or customers who placed the purchase order. The service platform user sub-model 502 can have primary keys (PK) including user account IDs and user names. Each user account can correspond to one or more credit insurance orders modeled under the credit insurance order sub-model 504. Each credit insurance order can have a PK of a unique order ID, and one or more foreign keys (FKs). The FKs can include the account ID, an order amount, and an order status. The account ID included in the FKs can link the corresponding order to the user account. As such, the corresponding user account can be found when the credit insurance order is searched for.

Each credit insurance order can correspond to one or more logistics documents (or shipping documents). The logistics document data can be modeled under the logistics document sub-model 506. The logistics document sub-model 506 can have a PK of a unique logistics ID (e.g., the shipping document ID or tracking number), and FKs including the order ID of the corresponding credit insurance order, and a shipping status.

Each logistics document can correspond to an insurance document. The insurance document data can be modeled under the insurance document sub-model 508. The insurance document sub-model 508 can have a PK of an insurance document ID, and FKs including the logistics ID of the corresponding logistics document, and an insured amount.

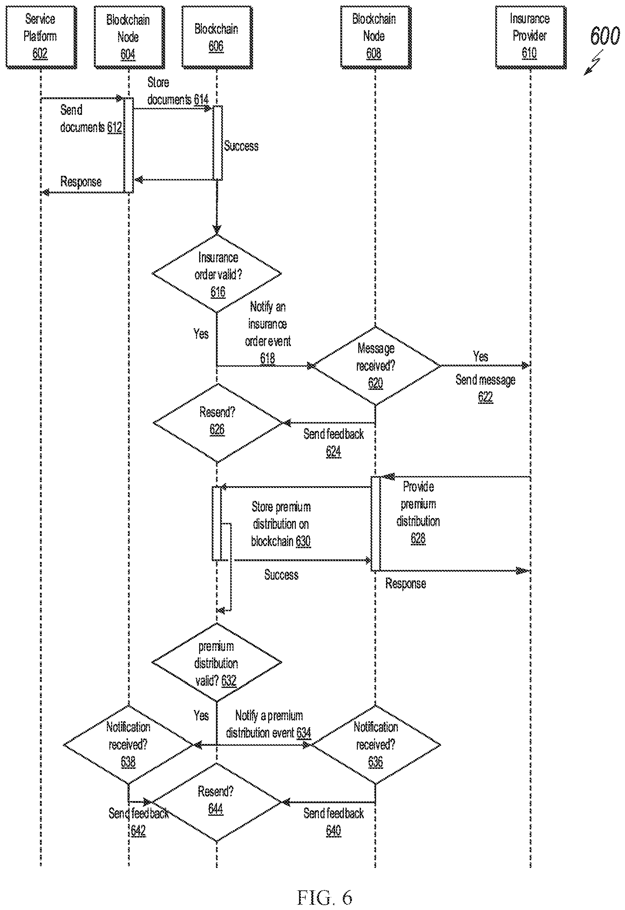

FIG. 6 is a swim-lane diagram illustrating an example of a process 600 of providing message feedback in accordance with embodiments of this specification. As discussed in the description of FIG. 3, various event messages for different services can be generated to facilitate shipping insurance generation and premium distribution. As the purchase orders, shipping insurances, and logistics documents accumulate, the volume of data communicated inside or through the blockchain network can be high. In some cases, data packet losses may occur, especially when data surges happen during busy hours. To avoid losing important event messages, a message feedback process can be implemented.

At 612, the service platform 602 can send one or more of a shipping document and shipping insurance order to the blockchain node 604 associated with the service platform. At 614, the blockchain node 604 can invoke a smart contract to store the documents on the blockchain 606 through consensus with other blockchain nodes of the blockchain network. In some embodiments, the blockchain node 604 can be part of the service platform 602. In some embodiments, the blockchain node 604 can be a computing device or system that remotely serves the service platform 602.

In some examples, the smart contract can generate an event message to notify the blockchain node 604 a document event that new documents are successfully stored on the blockchain 606. The event message can be stored in a cache storage of the blockchain node 604. In response to receiving the notification, the blockchain node 604 can send a response to the service platform 602 indicating the documents sent by the service platform 602 are successfully processed.

At 616, the smart contract can determine whether the insurance order is valid based on the shipping insurance order and the shipping document. For example, in response to the document event, the smart contract can invoke an insurance order review function as discussed in the description of FIG. 3 to verify and approve the shipping insurance order. After the approval of the insurance order through the insurance order review function, the smart contract can invoke the event management function to generate the insurance order event message indicating that the shipping insurance order is effective.

At 618, the blockchain node 608 associated with the insurance provider 610 can be notified of the insurance order event. In some embodiments, the blockchain node 608 can be part of a computing system of the insurance provider 610. In some embodiments, the blockchain node 608 can be a computing device or system that remotely serves the service platform 602. In some examples, the event message can be automatically sent to the blockchain node 608 after generation. In some examples, the event message can be retrieved by the blockchain node 608.

At 620, the blockchain node 608 can determine whether the insurance order event message is received. If yes, the insurance order event message can be forwarded to the insurance provider 610 at 622. Otherwise, a feedback message can be sent by the blockchain node 608 at 624. In some cases, the smart contract can invoke the event management function to generate the event message periodically, until an acknowledgement (ACK) of receipt feedback is received at 624.

In some cases, the feedback message can be a negative acknowledgement (NACK) if it is determined that the event message is incorrectly received or not received within a predetermined period of time at 620. In such cases, it can be determined at 626 that the event message needs to be resent. In some examples, the event message can be deleted from cache to save storage space after the event message is resent at 626. In some examples, the event message can be deleted after an ACK is received from the blockchain node 608.

In some cases, the feedback message can include specific instructions. In some examples, the feedback message can include instructions of providing the shipping insurance order document for further review on validity of the order. In response to receiving the feedback message, the smart contract can be executed to retrieve the shipping insurance order document from the blockchain 606 to the blockchain node 608. In some examples, the specific instructions can include sending event messages in a certain range of message numbers or in a particular sequence. In response to receiving the feedback message, the smart contract can be executed to resend the event messages according to the range or sequence provided by the feedback message.

At 628, the insurance provider 610 generates a premium distribution and send it to the blockchain node 608 to be stored on the blockchain 606 at 630. In some examples, the smart contract can generate an event message to notify the blockchain node 608 the premium distribution is successfully stored on the blockchain 606. In response to receiving the notification, the blockchain node 608 can send a response to the insurance provider 610 indicating the premium distribution is successfully recorded.

At 632, the blockchain node 608 can execute a smart contract to invoke the insurance order review function to verify whether the premium distribution complies to the premium distribution plan agreed upon by the service providers. If yes, the smart contract can be executed to generate and store a premium distribution event message by invoking the event management function. After the premium distribution event message is generated, it can be sent to other blockchain nodes for consensus. After consensus, the premium distribution event message is stored on the blockchain. The event message can then be notified to the blockchain node 604 associated with the service platform 602 and the blockchain node 608 associated with the insurance provider 610 at 634.

At 636, the blockchain node 608 can determine whether the premium distribution event message is received. If yes, the event message can be forwarded to the insurance provider 610. Otherwise, a feedback message can be sent by the blockchain node 608 at 640. At 638, the blockchain node 604 can determine whether the premium distribution event message is received. If yes, the event message can be forwarded to the service platform 602. Otherwise, a feedback message can be sent by the blockchain node 604 at 642. In some examples, the feedback messages sent at 640 or 642 by the blockchain node 604 or blockchain node 608, respectively, can be similar to the feedback messages sent at 624.

In some cases, the smart contract can invoke the event management function to generate the event message periodically, until an ACK is received. In some cases, the feedback message can be a NACK if it is determined that the event message is incorrectly received or not received within a predetermined period of time. In such cases, it can be determined at 644 that the event message needs to be resent. After the service platform 602 receives the premium distribution event message, it can notify the e-commerce platform to distribute the premium to the service providers. In some examples, the service platform 602 can forward the event messages to other service providers such as the e-commerce platform and the shipping insurance broker.

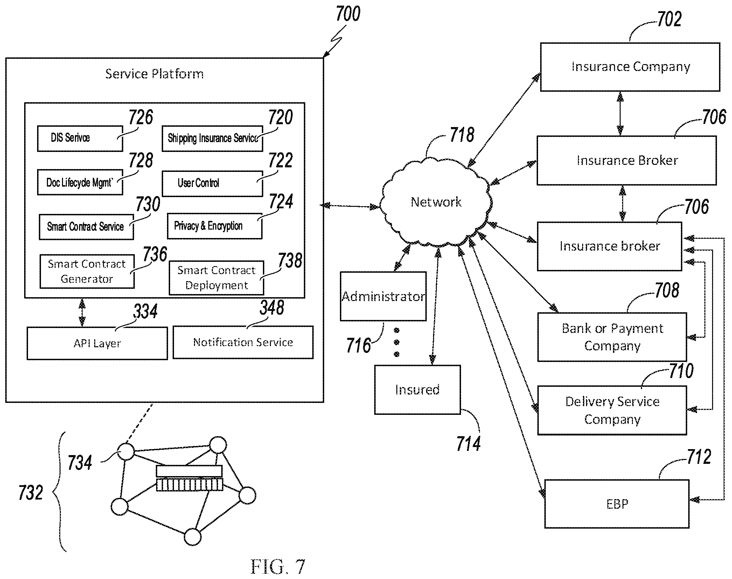

FIG. 7 shows an example of a system for implementing a blockchain-based shipping insurance service platform 700 for enabling secure and efficient processing of shipping insurance documents in accordance with embodiments of this specification. The platform 700 provides an integrated interface that allows users to manage information used in various stages of the shipping insurance generation and insurance premium distribution processes. The service platform 700 provides services related to various stages of processing of shipping insurance documents. In some embodiments, the service platform 700 provides services to an insurance broker 706 so that the shipping insurance services processed by the insurance broker 706 can be recorded in a secure manner, such as stored in a blockchain database and smart contract data caches. In some embodiments, the service platform 700 can also provide services to other entities associated with a purchase order or credit insurance order, such as one or more insurance providers 702, one or more insurance brokers 706, one or more banks or payment companies 708, one or more delivery service companies 710, an e-commerce platform 712 or an online seller, one or more insureds 714, and one or more administrators 716 through a network 718, such as the Internet.

For example, the insurance provider 702 can be responsible for providing and processing shipping insurance services, such as reviewing information about insurance applications, evaluating qualifications of insurance, assessing duties, taxes, and fees associated with the shipping insurance. The insurance provider 702 is also responsible for detecting fraudulent activities meant to commit insurance frauds.

A feature of the service platform 700 is that the platform enables linking of multiple types of documents associated with a purchase order, or multiple purchase orders, allowing the insurance provider 702 to more easily review the information recorded across multiple documents associated with the purchase order, and thus more easily detect inconsistencies or anomalies in the documents indicating potential fraudulent activities. Another feature of the service platform 700 is that the platform provides encryption services for encrypting private information to protect privacy of the users. Another feature of the service platform 700 is that the shipping information, insurance terms and conditions, and insurance premium distribution information are recorded in a blockchain database through consensus of the blockchain nodes 734 of a blockchain network 732, the information can be easily verified and trusted by parties that have access to the blockchain database. A further feature of the service platform 700 is that the platform is scalable through the use of smart contract pools so that the platform 700 can process large amounts of shipping insurance data.

The insurance broker 706 can be, e.g., a professional who prepares and submits documents to obtain shipping insurances from the insurance provider 702. The insurance broker 706 can be, e.g., an on-line or web-based system maintained by one or more insurance brokers for collecting and processing shipping insurance related information. In some examples, the insurance broker 706 collects the shipping insurance related information from multiple parties, such as the banks or payment companies 708, the delivery services companies 710, the e-commerce platform 712, and the insureds 714, and provides the collected information to the insurance broker 706, who then submits the documents to the insurance provider 702. The insurance broker 706 sends copies of the documents to the service platform 700 for record keeping, e.g., by storing the documents in a blockchain database 740 and/or a smart contract data cache 742.

In some embodiments, the insurance broker 706 submits the documents to the service platform 700, and the service platform 700 notifies the insurance provider 702 that the information has been recorded. The insurance provider 702 then accesses the information recorded by the service platform 700 to assess and collect the insurance premium associated with the purchase order, and to detect fraudulent activities.

The bank or payment company 708 sends insurance payment to the e-commerce platform 712. The bank or payment company 708 provides payment information associated with the shipping insurance premium of the purchase orders to the insurance broker 706. The bank or payment company 708 also interacts with the service platform 700 to provide, e.g., payment information related to the purchase orders.

The delivery services company 710 receives the packages including the merchandise from the e-commerce platform 712, generates delivery documents that include shipment tracking information associated with the purchase orders. The delivery services company 710 provides the delivery documents related to the purchase orders to the e-commerce platform 712 and the insurance broker 706. The delivery services company 710 transports and delivers the packages of merchandise to the insureds 714. The delivery services company 710 provides updated delivery information, such as updated shipment tracking information, to the insurance broker 706. The delivery services company 710 also interacts with the service platform 700 to provide, e.g., shipment tracking information related to the purchase orders.

The e-commerce platform 712 provides information about the purchase orders, such as order data, invoice information, shipping insurance orders and shipment tracking number to the insurance broker 706. In some examples, the e-commerce platform 712 can also act as the insurance broker 706.

The insured 714 places orders for the merchandise and shipping insurance, pays for the merchandise and insurance, and initiates delivery of the merchandise. The insured 714 can provide relevant information to the insurance broker 706. The insured 714 can also interact with the service platform 700, e.g., to provide information regarding the purchase order, or to obtain information regarding the progress of the insurance status for the purchase order.

The administrator 716 is responsible for controlling which members or parties have access to what information, and control authorization levels of the users of the service platform 700 to ensure that privacy of the users are protected.

In some examples, the service platform 700 collects information from the parties mentioned above (e.g., e-commerce platform 712, banks or payment companies 708, delivery services companies 710, and insureds 714) and compiles the information into a format that can be easily reviewed by the insurance provider 702. The service platform 700 can link multiple documents obtained from multiple parties to make it easier for the insurance provider 702 to review the documents together.

The service platform 700 interacts with a blockchain network 732 that includes a plurality of blockchain nodes 734 to securely record shipping insurance related information in a blockchain database 740 and a smart contract data cache 742. The smart contract data cache 742 can store mutable data in the form of smart contract data, and the blockchain database 740 can store incremental, immutable, permanent blockchain data. This provides a good balance between processing efficiency and storage cost of the blockchain data.

The service platform 700 is configured to provide tools (e.g., web based portals and interfaces, APIs, and smart contracts) that enable the insurance provider 702, the insurance broker 706, the bank or payment company 708, the delivery services company 710, the e-commerce platform 712, the insured 714, and the administrator 716 to conveniently and securely access and process the shipping insurance related information and documents associated with the insurance orders. For example, the service platform 700 can provide interfaces that facilitate the recording, updating, and reviewing of order data, logistics data, insurance data, and payment data associated with the purchase orders, and facilitate recording of the shipping insurance related information in one or more blockchain databases 740 and smart contract data caches 742.

For example, the service platform 700 can provide tools to implement the processes 300 of FIG. 3 and 500 of FIG. 5 for handling shipping insurance data. In some examples, the service platform 700 includes a shipping insurance service module 720, a user control module 722, a privacy and encryption module 724, a DIS service module 726, a document lifecycle management module 728, and a smart contract service module 730. The API layer 334 (described above in connection with FIG. 3) includes APIs (e.g., 336, 338, 340, 342, 344, and 346) that can be called by the users to invoke the services of the modules 720, 722, 724, 726, 728, and 730, respectively.

The service module 700 includes the notification service 348 (described above in connection with FIGS. 3-5) that enables the blockchain nodes 734 of the blockchain network 732 to notify the service platform 700 and/or the users for updates on document events and user events.

Many of the functions provided by the service platform 700 related to recording or access information stored in the blockchain database 740 and the smart contract data cache 742 involve the use of smart contracts. In some embodiments, a smart contract is developed by software programmers and/or people familiar with the shipping insurance generation or insurance premium distribution processes, and the administrator 716 registers the smart contract with the blockchain network through the service platform 700.

For example, the service platform 700 can provide an API (e.g., CreateContract<contractId, body>) that can be used to register a smart contract with the blockchain network. The administrator 716 invokes the API provided by the service platform 700 to establish a new smart contract with the blockchain network. The service platform 700 sends the request to establish a new smart contract to the blockchain network. After the blockchain network registers the smart contract on the blockchain, the blockchain network sends a message to the service platform 700 indicating that the new smart contract has been registered at the blockchain. The service platform 700 then sends a message to the administrator 716 indicating that the new smart contract has been registered at the blockchain.

Using the process described above, the administrator 716 can deploy smart contracts on the blockchain without interacting with the blockchain network 732. Different blockchain networks 732 may have different protocols for deploying smart contracts, and the protocols may not be intuitive to people who are not familiar with those blockchain networks 732. The service platform 700 provides an easy-to-use and consistent application programming interface to enable the administrator 716 to deploy the smart contracts without having to learn the protocols of each blockchain network for deploying smart contracts.

In some examples, the service platform 700 includes a smart contract generator 736 that includes customizable smart contract templates that allow a person familiar with the shipping insurance process but is not an expert in computer programming to be able to generate smart contracts suitable for processing shipping insurance data. The person can invoke the functions of the smart contract generator 736 by calling an API in the API layer 334 to generate a smart contract for processing a particular type of shipping insurance related document for a certain stage of the insurance generation or insurance premium distribution process. The person can invoke the functions of a smart contract deployment module 738 by calling an API in the API layer 334 to deploy the new smart contract on the blockchain. The smart contract deployment module 738 can include information about protocols for deploying smart contracts at veracious blockchain networks 732.

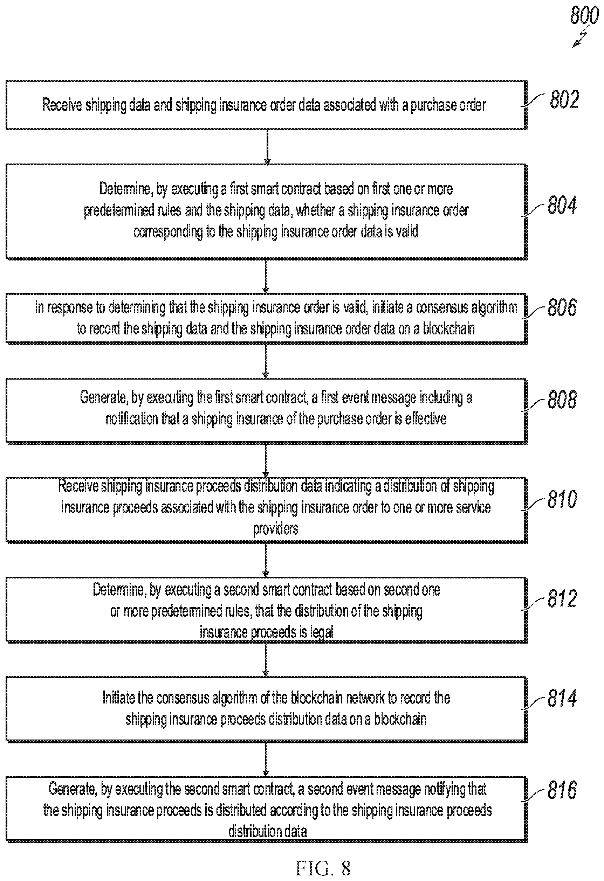

FIG. 8 depicts an example of a process 800 that can be executed in accordance with embodiments of this specification. For convenience, the process 800 will be described as being performed by a system of one or more computers, located in one or more locations, and programmed appropriately in accordance with this specification. For example, an internal computer system, e.g., the internal system 401 of FIG. 4, appropriately programmed, can perform the process 800.

At 802, the computer system receives shipping data and shipping insurance order data associated with a purchase order. In some cases, the shipping data is received from a delivery services provider and proves that the purchase order is shipped by the delivery services provider.

At 804, the computer system determines, by executing a first smart contract based on first one or more predetermined rules and the shipping data, whether a shipping insurance order corresponding to the shipping insurance order data is valid.

At 806, in response to determining that the shipping insurance order is valid, the computer system initiates a consensus algorithm to record the shipping data and the shipping insurance order data on a blockchain. In some cases, the shipping insurance order is received from a shipping insurance service platform or an electronic business platform, and wherein the shipping insurance order indicates one or more of items insured, an insurance premium, a declared value of the purchase order, or an insurance included for the purchase order.

At 808, the computer system generates, by executing the first smart contract, a first event message including a notification that a shipping insurance of the purchase order is effective.

At 810, the computer system receives shipping insurance premium distribution data indicating a distribution of shipping insurance premium associated with the shipping insurance order to one or more service providers.

At 812, the computer system determines, by executing a second smart contract based on second one or more predetermined rules, that the distribution of the shipping insurance premium is legal. In some cases, the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

In some cases, the one or more service providers include one or more of the service system, a shipping insurance service platform, or an insurance provider. In some cases, the second one or more predetermined rules provide a shipping insurance premium distribution plan agreed upon by the service system, the shipping insurance service platform, or the insurance provider.

At 814, the computer system initiates the consensus algorithm of the blockchain network to record the shipping insurance premium distribution data on a blockchain. In some cases, the consensus algorithm is one of proof of work (PoW), proof of stake (PoS), or practical Byzantine fault tolerance (PBFT).

At 816, the computer system generates, by executing the second smart contract, a second event message notifying that the shipping insurance premium is distributed according to the shipping insurance premium distribution data. In some cases, the first event message and second event message are stored on the blockchain as transactions.

In some cases, the first event message is included in a plurality of event messages directed to an insurance provider and is communicated to the insurance provider through a blockchain node associated with the insurance provider, and wherein the shipping insurance premium is received in response to communicating the first event message to the insurance provider. In some cases, the second event message is included in a plurality of event messages directed to the one or more service providers.

In some cases, the shipping insurance premium is withheld by the service system in response to determining that the shipping insurance order is valid, and the insurance premium is distributed to the service system, the shipping insurance service platform, and the insurance provider according to the second one or more predetermined rules in response to determining that the distribution of the shipping insurance premium is legal.

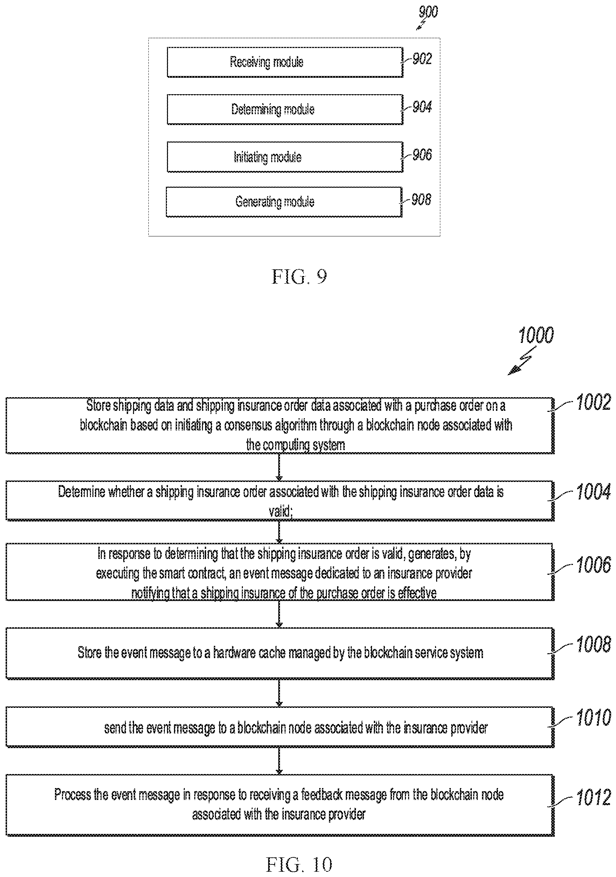

FIG. 9 is a diagram of an example of modules of an apparatus 900 in accordance with embodiments of this specification. The apparatus 900 can be an example of an embodiment of a computer system configured to provide message services. The apparatus 900 can correspond to the embodiments described above, and the apparatus 900 includes the following: a receiving module 902 that receives shipping data and shipping insurance order data associated with a purchase order; a determining module 904 that determines, by executing a first smart contract based on first one or more predetermined rules and the shipping data, whether a shipping insurance order corresponding to the shipping insurance order data is valid; an initiating module 906 that initiates a consensus algorithm to record the shipping data and the shipping insurance order data on a blockchain; a generating module 908 that generates, by executing the first smart contract, a first event message including a notification that a shipping insurance of the purchase order is effective; the receiving module 902 that receives shipping insurance premium distribution data indicating a distribution of shipping insurance premium associated with the shipping insurance order to one or more service providers; the determining module 904 that determines, by executing a second smart contract based on second one or more predetermined rules, that the distribution of the shipping insurance premium is legal; the initiating module 906 that initiates the consensus algorithm of the blockchain network to record the shipping insurance premium distribution data on a blockchain; and the generating module 908 that generates, by executing the second smart contract, a second event message notifying that the shipping insurance premium is distributed according to the shipping insurance premium distribution data.

In an optional embodiment, the first event message and second event message are stored on the blockchain as transactions.

In an optional embodiment, the first event message is included in a plurality of event messages directed to an insurance provider and is communicated to the insurance provider through a blockchain node associated with the insurance provider, and wherein the shipping insurance premium is received in response to communicating the first event message to the insurance provider.

In an optional embodiment, the second event message is included in a plurality of event messages directed to the one or more service providers. In an optional embodiment, the shipping data is received from a delivery services provider and proves that the purchase order is shipped by the delivery services provider.

In an optional embodiment, the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

In an optional embodiment, the shipping insurance order is received from a shipping insurance service platform or an electronic business platform, and wherein the shipping insurance order indicates one or more of items insured, an insurance premium, a declared value of the purchase order, or an insurance included for the purchase order.

In an optional embodiment, the consensus algorithm is one of PoW, PoS, or PBFT. In an optional embodiment, the one or more service providers include one or more of the service system, a shipping insurance service platform, or an insurance provider.

In an optional embodiment, the second one or more predetermined rules provide a shipping insurance premium distribution plan agreed upon by the service system, the shipping insurance service platform, or the insurance provider.

In an optional embodiment, the insurance premium is withheld by the service system in response to determining that the shipping insurance order is valid, and the insurance premium is distributed to the service system, the shipping insurance service platform, and the insurance provider according to the second one or more predetermined rules in response to determining that the distribution of the shipping insurance premium is legal.

FIG. 10 is a flowchart of another example of a process 1000 in accordance with embodiments of this specification. For convenience, the process 1000 will be described as being performed by a blockchain node, which can include a system of one or more computers, located in one or more locations, and programmed appropriately in accordance with this specification. For example, a computer system, e.g., the computer system 100 of FIG. 1, appropriately programmed, can perform the process 1000.

At 1002, the blockchain node stores shipping data and shipping insurance order data associated with a purchase order on a blockchain, based on initiating a consensus algorithm through a blockchain node associated with the service system. In some cases, the consensus algorithm is one of PoW, PoS, or PBFT.

At 1004, the blockchain node determines, by executing a smart contract based on one or more predetermined rules and the shipping data, whether a shipping insurance order associated with the shipping insurance data is valid. In some cases, the shipping insurance order indicates one or more of items insured, an insurance premium, a declared value of the purchase order, or an insurance included for the purchase order.

At 1006, in response to determining that the shipping insurance order is valid, the blockchain node generates, by executing the smart contract, an event message dedicated to an insurance provider notifying that a shipping insurance of the purchase order is effective.

At 1008, the blockchain node stores the event message to a hardware cache managed by the service system. At 1010 , the blockchain node sends the event message to a blockchain node associated with the insurance provider. In some cases, the sending the event message is performed periodically until the feedback message is received.

At 1012, the blockchain node processes the event message in response to receiving a feedback message from the blockchain node associated with the insurance provider. In some cases, the feedback message indicates that the event message is received by the blockchain node associated with the insurance provider, and the processing the event message comprises: storing the event message on the blockchain based on performing the consensus algorithm; and deleting the event message from the hardware cache.

In some cases, when the feedback message indicates that the event message is incorrectly received or not received within a predetermined period of time, the processing the event message comprises resending the event message to the blockchain node associated with the insurance provider.

In some cases, the event message is a first event message, the smart contract is a first smart contract, the feedback message is a first feedback message, and the blockchain node further receives, from the blockchain node associated with the insurance provider, a second event message directed to one or more service providers, wherein the second event message notifies a distribution of a shipping insurance premium associated with the shipping insurance order to one or more service providers. In some cases, the one or more service providers include one or more of the service system, a shipping insurance service platform, or an insurance provider.

In some examples, the blockchain node further sends a second feedback message to the blockchain node associated with the insurance provider indicating that the second event message is correctly received, determines, by executing a second smart contract based on second one or more predetermined rules, that the distribution of the shipping insurance premium is legal. In some examples, the blockchain node further stores the second event message on the blockchain based on the consensus algorithm; and sending the second event message to the one or more service providers.

In some cases, the blockchain node further receives a shipping insurance premium distribution from the blockchain node associated with the insurance provider in response to communicating the first event message to the insurance provider; and storing the shipping insurance premium distribution on the blockchain based on the consensus algorithm.

In some cases, the second one or more predetermined rules provide an insurance premium distribution plan agreed upon by the service system, the shipping insurance service platform, or the shipping insurance provider.

In some cases, the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

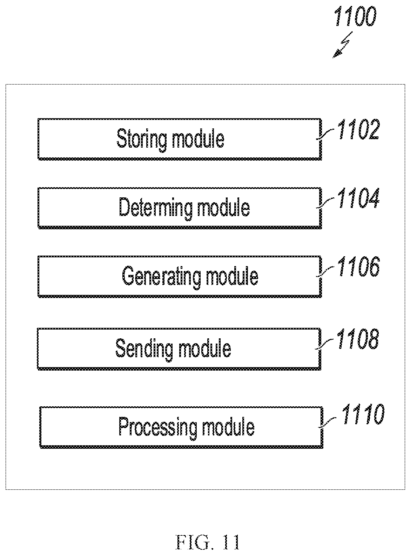

FIG. 11 is a diagram of another example of modules of an apparatus 1100 in accordance with embodiments of this specification. The apparatus 1100 can be an example of an embodiment of a blockchain node. The apparatus 1100 can correspond to the embodiments described above, and the apparatus 1100 includes the following: a storing module 1102 that stores shipping data and shipping insurance order data associated with a purchase order on a blockchain based on initiating a consensus algorithm through a blockchain node associated with the service system; a determining module 1104 that determines, by executing a smart contract based on one or more predetermined rules and the shipping data, whether a shipping insurance order associated with the shipping insurance data is valid; a generating module 1106 that generates, by executing the smart contract, an event message dedicated to an insurance provider notifying that a shipping insurance of the purchase order is effective; the storing module 1102 that stores the event message to a hardware cache managed by the service system; a sending module 1108 that sends the event message to a blockchain node associated with the insurance provider; and an processing module 1110 that processes the event message in response to receiving a feedback message from the blockchain node associated with the insurance provider.

In an optional embodiment, the feedback message indicates that the event message is received by the blockchain node associated with the insurance provider, and the processing the event message comprises: storing the event message on the blockchain based on performing the consensus algorithm; and deleting the event message from the hardware cache.

In an optional embodiment, when the feedback message indicates that the event message is incorrectly received or not received within a predetermined period of time, the processing the event message comprises resending the event message to the blockchain node associated with the insurance provider. In an optional embodiment, the sending the event message is performed periodically until the feedback message is received.

In an optional embodiment, the event message is a first event message, the smart contract is a first smart contract, the feedback message is a first feedback message, and the apparatus 1100 further comprises: receiving, from the blockchain node associated with the insurance provider, a second event message directed to one or more service providers, wherein the second event message notifies a distribution of a shipping insurance premium associated with the shipping insurance order to one or more service providers; sending a second feedback message to the blockchain node associated with the insurance provider indicating that the second event message is correctly received; determining, by executing a second smart contract based on second one or more predetermined rules, that the distribution of the shipping insurance premium is legal; storing the second event message on the blockchain based on the consensus algorithm; and sending the second event message to the one or more service providers.

In an optional embodiment, the apparatus 1100 further comprises: receiving shipping insurance premium distribution data from the blockchain node associated with the insurance provider in response to communicating the first event message to the insurance provider; and storing the shipping insurance premium distribution data on the blockchain based on the consensus algorithm.

In an optional embodiment, the one or more service providers include one or more of the service system, a shipping insurance service platform, or an insurance provider. In an optional embodiment, the second one or more predetermined rules provide an insurance premium distribution plan agreed upon by the service system, the shipping insurance service platform, or the shipping insurance provider.

In an optional embodiment, the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

In an optional embodiment, the shipping insurance order indicates one or more of items insured, an insurance premium, a declared value of the purchase order, or an insurance included for the purchase order. In an optional embodiment, the consensus algorithm is one of PoW, PoS, or PBFT.

The system, apparatus, module, or unit illustrated in the previous embodiments can be implemented by using a computer chip or an entity, or can be implemented by using a product having a certain function. A typical embodiment device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an embodiment process of functions and roles of each module in the apparatus, references can be made to an embodiment process of corresponding steps in the previous method. Details are omitted here for simplicity.

Because an apparatus embodiment basically corresponds to a method embodiment, for related parts, references can be made to related descriptions in the method embodiment. The previously described apparatus embodiment is merely an example. The modules described as separate parts may or may not be physically separate, and parts displayed as modules may or may not be physical modules, may be located in one position, or may be distributed on a number of network modules. Some or all of the modules can be selected based on actual demands to achieve the objectives of the solutions of the specification. A person of ordinary skill in the art can understand and implement the embodiments of the present application without creative efforts.

Referring again to FIGS. 8 and 10, it can be interpreted as illustrating an internal functional module and a structure of a computer system or a blockchain node. An execution body in essence can be an electronic device, and the electronic device includes the following: one or more processors; and one or more computer-readable memories configured to store an executable instruction of the one or more processors. In some embodiments, the one or more computer-readable memories are coupled to the one or more processors and have programming instructions stored thereon that are executable by the one or more processors to perform algorithms, methods, functions, processes, flows, and procedures, as described in this specification. This specification also provides one or more non-transitory computer-readable storage media coupled to one or more processors and having instructions stored thereon which, when executed by the one or more processors, cause the one or more processors to perform operations in accordance with embodiments of the methods provided herein.

This specification further provides a system for implementing the methods provided herein. The system includes one or more processors, and a computer-readable storage medium coupled to the one or more processors having instructions stored thereon which, when executed by the one or more processors, cause the one or more processors to perform operations in accordance with embodiments of the methods provided herein.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions, encoded on a computer program carrier, for execution by, or to control the operation of, data processing apparatus. For example, a computer program carrier can include one or more computer-readable storage media that have instructions encoded or stored thereon. The carrier may be a tangible non-transitory computer-readable medium, such as a magnetic, magneto optical, or optical disk, a solid state drive, a random access memory (RAM), a read-only memory (ROM), or other types of media. Alternatively, or in addition, the carrier may be an artificially generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

Processors for execution of a computer program include, by way of example, both general- and special-purpose microprocessors, and any one or more processors of any kind of digital computer. Generally, a processor will receive the instructions of the computer program for execution as well as data from a non-transitory computer-readable medium coupled to the processor.

The term "data processing apparatus" encompasses all kinds of apparatuses, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

The processes and logic flows described in this specification can be performed by one or more computers or processors executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will also include, or be operatively coupled to receive data from or transfer data to one or more storage devices. The storage devices can be, for example, magnetic, magneto optical, or optical disks, solid state drives, or any other type of non-transitory, computer-readable media. However, a computer need not have such devices. Thus, a computer may be coupled to one or more storage devices, such as, one or more memories, that are local and/or remote. For example, a computer can include one or more local memories that are integral components of the computer, or the computer can be coupled to one or more remote memories that are in a cloud network. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Components can be "coupled to" each other by being commutatively such as electrically or optically connected to one another, either directly or via one or more intermediate components. Components can also be "coupled to" each other if one of the components is integrated into the other. For example, a storage component that is integrated into a processor (e.g., an L2 cache component) is "coupled to" the processor.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While this specification contains many specific embodiment details, these should not be construed as limitations on the scope of what is being claimed, which is defined by the claims themselves, but rather as descriptions of features that may be specific to particular embodiments. Certain features that are described in this specification in the context of separate embodiments can also be realized in combination in a single embodiment. Conversely, various features that are described in the context of a single embodiments can also be realized in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method (1000) performed by a computing system for managing blockchain-based event messages, the method comprising:
storing (1002) shipping data and shipping insurance order data associated with a purchase order on a blockchain (216, 606) based on initiating a consensus algorithm through a blockchain node associated with the computing system;
determining (1004), by executing a smart contract based on one or more predetermined rules and the shipping data, whether a shipping insurance order associated with the shipping insurance order data is valid;
in response to determining that the shipping insurance order is valid, generating (1006), by executing the smart contract, an event message dedicated to an insurance provider (318, 610) notifying that a shipping insurance of the purchase order is effective, wherein the smart contract invokes an event management function to periodically generate the first event message until an acknowledgement receipt feedback is received;
storing (1008) the event message to a hardware cache managed by the computing system;
sending (1010) the event message to a blockchain node associated with the insurance provider; and
processing (1012) the event message in response to receiving a feedback message from the blockchain node associated with the insurance provider.

2. The computer-implemented method (1000) of claim 1, wherein the feedback message indicates that the event message is received by the blockchain node associated with the insurance provider (318, 610), and the processing the event message comprises:
storing the event message on the blockchain based on performing the consensus algorithm; and
deleting the event message from the hardware cache.

3. The computer-implemented method (1000) of any previous claim, wherein, when the feedback message indicates that the event message is incorrectly received or not received within a predetermined period of time, the processing the event message comprises resending the event message to the blockchain node associated with the insurance provider (318, 610).

4. The computer-implemented method (1000) of any previous claim, wherein sending (1010) the event message is performed periodically until the feedback message is received.

5. The computer-implemented method (1000) of any previous claim, wherein the event message is a first event message, the smart contract is a first smart contract, the feedback message is a first feedback message, and the method further comprises:
receiving, from the blockchain node associated with the insurance provider (318, 610), a second event message directed to one or more service providers, wherein the second event message notifies a distribution of a shipping insurance premium associated with the shipping insurance order to one or more service providers;
sending a second feedback message to the blockchain node associated with the insurance provider indicating that the second event message is correctly received;
determining, by executing a second smart contract based on second one or more predetermined rules, that the distribution of the shipping insurance premium is legal;
storing the second event message on the blockchain based on the consensus algorithm; and
sending the second event message to the one or more service providers.

6. The computer-implemented method (1000) of claim 5, further comprising:
receiving shipping insurance premium distribution data from the blockchain node associated with the insurance provider (318, 610) in response to communicating the first event message to the insurance provider; and
storing the shipping insurance premium distribution data on the blockchain based on the consensus algorithm.

7. The computer-implemented method (1000) of claim 5, wherein the one or more service providers include one or more of the computing system, a shipping insurance service platform (302, 602), or an insurance provider (318, 610).

8. The computer-implemented method (1000) of claim 5, wherein the second one or more predetermined rules include a shipping insurance premium distribution plan agreed upon by the computing system, the shipping insurance service platform (302, 602), and the insurance provider (318, 610).

9. The computer-implemented method (1000) of any previous claim, wherein the first one or more predetermined rules include one or more of a coverage limit of a declared value of the purchase order, items covered by the shipping insurance, or an insurance limit of the purchase order, and wherein the shipping insurance order is valid when the purchase order satisfies the first one or more predetermined rules.

10. The computer-implemented method (1000) of any previous claim, wherein the shipping insurance order data indicates one or more of items insured, an insurance premium, a declared value of the purchase order, or an insurance included for the purchase order.

11. The computer-implemented method (1000) of any previous claim, wherein the consensus algorithm is one of proof of work, proof of stake, or practical Byzantine fault tolerance.

12. A system for managing blockchain-based event messages, comprising:
one or more processors; and
one or more computer-readable memories coupled to the one or more processors and having instructions stored thereon that are executable by the one or more processors to perform the method (1000) of any of claims 1 to 11.

13. One or more non-transitory computer-readable storage media having instructions stored thereon which, when executed by one or more processors, cause the one or more processors to perform the method (1000) of any of claims 1 to 11.

## Patentansprüche

1. Computerimplementiertes Verfahren (1000), das von einem Datenverarbeitungssystem durchgeführt wird, zur Verwaltung von Nachrichten bezüglich Blockchain-basierter Ereignisse, wobei das Verfahren umfasst:
Speichern (1002) von Versanddaten und Versandversicherungsauftragsdaten, die mit einem Kaufauftrag assoziiert sind, auf einer Blockchain (216, 606) basierend auf einem Initiieren eines Konsensusalgorithmus mittels eines Blockchain-Knotens, der mit dem Datenverarbeitungssystem assoziiert ist;
Bestimmen (1004), ob ein mit den Versandversicherungsauftragsdaten assoziierter Versandversicherungsauftrag gültig ist, durch Ausführen eines Smart Contract basierend auf einer oder mehreren vorbestimmten Regeln und den Versanddaten;
Erzeugen (1006) einer Ereignisnachricht, die einem Versicherungsanbieter (318, 610) gewidmet ist und bekannt gibt, dass eine Versandversicherung des Kaufauftrags wirksam ist, durch Ausführen des Smart Contract in Reaktion auf ein Bestimmen, dass der Versandversicherungsauftrag gültig ist, wobei der Smart Contract eine Ereignisverwaltungsfunktion aufruft, um die erste Ereignisnachricht periodisch zu erzeugen, bis eine Empfangsbestätigungsrückmeldung empfangen wird;
Speichern (1008) der Ereignisnachricht in einem Hardwarecache, der vom Datenverarbeitungssystem verwaltet wird;
Senden (1010) der Ereignisnachricht an einen Blockchain-Knoten, der mit dem Versicherungsanbieter assoziiert ist; und
Verarbeiten (1012) der Ereignisnachricht in Reaktion auf den Empfang einer Rückmeldungsnachricht vom Blockchain-Knoten, der mit dem Versicherungsanbieter assoziiert ist.

2. Computerimplementiertes Verfahren (1000) nach Anspruch 1, wobei die Rückmeldungsnachricht angibt, dass die Ereignisnachricht durch den Blockchain-Knoten empfangen wird, der mit dem Versicherungsanbieter (318, 610) assoziiert ist, und das Verarbeiten der Ereignisnachricht umfasst:
Speichern der Ereignisnachricht auf der Blockchain basierend auf dem Durchführen des Konsensusalgorithmus; und
Löschen der Ereignisnachricht aus dem Hardwarecache.

3. Computerimplementiertes Verfahren (1000) nach einem der vorhergehenden Ansprüche, wobei, wenn die Rückmeldungsnachricht angibt, dass die Ereignisnachricht inkorrekt empfangen oder nicht innerhalb einer vorbestimmten Zeitdauer empfangen wird, das Verarbeiten der Ereignisnachricht ein erneutes Senden der Ereignisnachricht an den mit dem Versicherungsanbieter (318, 610) assoziierten Blockchain-Knoten umfasst.

4. Computerimplementiertes Verfahren (1000) nach einem der vorhergehenden Ansprüche, wobei das Senden (1010) der Ereignisnachricht periodisch durchgeführt wird, bis die Rückmeldungsnachricht empfangen wird.

5. Computerimplementiertes Verfahren (1000) nach einem der vorhergehenden Ansprüche, wobei die Ereignisnachricht eine erste Ereignisnachricht ist, der Smart Contract ein erster Smart Contract ist, die Rückmeldungsnachricht eine erste Rückmeldungsnachricht ist, und das Verfahren ferner umfasst:
Empfangen einer zweiten Ereignisnachricht, die an einen oder mehrere Dienstanbieter gerichtet ist, von dem mit Versicherungsanbieter (318, 610) assoziierten Blockchain-Knoten, wobei die zweite Ereignisnachricht eine Verteilung einer Versandversicherungsprämie, die mit dem Versandversicherungsauftrag assoziiert ist, an einen oder mehrere Dienstanbieter bekannt gibt;
Senden einer zweiten Rückmeldungsnachricht an den mit dem Versicherungsanbieter assoziierten Blockchain-Knoten mit der Angabe, dass die zweite Ereignisnachricht korrekt empfangen wird;
Bestimmen, dass die Verteilung der Versandversicherungsprämie rechtmäßig ist, durch Ausführen eines zweiten Smart Contract basierend auf einer oder mehreren zweiten vorbestimmten Regeln;
Speichern der zweiten Ereignisnachricht auf der Blockchain basierend auf dem Konsensusalgorithmus; und
Senden der zweiten Ereignisnachricht an den einen oder die mehreren Dienstanbieter.

6. Computerimplementiertes Verfahren (1000) nach Anspruch 5, ferner umfassend:
Empfangen von Daten bezüglich der Verteilung von Versandversicherungsprämien von dem mit dem Versicherungsanbieter (318, 610) assoziierten Blockchain-Knoten in Reaktion auf ein Kommunizieren der ersten Ereignisnachricht an den Versicherungsanbieter; und
Speichern der Daten bezüglich der Verteilung von Versandversicherungsprämien auf der Blockchain basierend auf dem Konsensusalgorithmus.

7. Computerimplementiertes Verfahren (1000) nach Anspruch 5, wobei der eine oder die mehreren Dienstanbieter eines oder mehrere von dem Datenverarbeitungssystem, einer Versandversicherungsdienstplattform (302, 602) oder einem Versicherungsanbieter (318, 610) umfassen.

8. Computerimplementiertes Verfahren (1000) nach Anspruch 5, wobei die eine oder die mehreren zweiten vorbestimmten Regeln einen Plan zur Verteilung der Versandversicherungsprämie umfassen, der vom Datenverarbeitungssystem, der Versandversicherungsdienstplattform (302, 602) und dem Versicherungsanbieter (318, 610) vereinbart wurde.

9. Computerimplementiertes Verfahren (1000) nach einem der vorhergehenden Ansprüche, wobei die eine oder die mehreren ersten vorbestimmten Regeln eines oder mehrere von einem Deckungslimit eines deklarierten Wertes des Kaufauftrags, Elementen, die von der Versandversicherung gedeckt werden, oder einem Versicherungslimit des Kaufauftrags umfassen, und wobei der Versandversicherungsauftrag gültig ist, wenn der Kaufauftrag die eine oder die mehreren ersten vorbestimmten Regeln erfüllt.

10. Computerimplementiertes Verfahren (1000) nach einem der vorhergehenden Ansprüche, wobei die Versandversicherungsauftragsdaten eines oder mehrere von versicherten Elementen, einer Versicherungsprämie, einem deklarierten Wert des Kaufauftrags oder einer für den Kaufauftrag enthaltenen Versicherung angeben.

11. Computerimplementiertes Verfahren (1000) nach einem der vorhergehenden Ansprüche, wobei der Konsensusalgorithmus eines ist von einem Proof-of-Work, einem Proof-of-Stake oder einer praktischen Byzantinischen Fehlertoleranz ist.

12. System zum Verwalten von Nachrichten bezüglich Blockchain-bezogener Ereignisse, umfassend;
einen oder mehrere Prozessoren; und
einen oder mehrere computerlesbare Speicher, die mit dem einen oder den mehreren Prozessoren gekoppelt sind und Anweisungen darauf gespeichert aufweisen, die von dem einen oder den mehreren Prozessoren zum Durchführen des Verfahrens (1000) nach einem der Ansprüche 1 bis 11 ausgeführt werden können.

13. Ein oder mehrere nichtflüchtige computerlesbare Speichermedien, die Anweisungen darauf gespeichert aufweisen, die bei Ausführung durch einen oder mehrere Prozessoren den einen oder die mehreren Prozessoren zum Durchführen des Verfahrens (1000) nach einem der Ansprüche 1 bis 11 veranlassen.

## Revendications

1. Procédé informatisé (1000) exécuté par un système informatique pour gérer des messages événementiels basés sur une chaîne de blocs, le procédé comprenant :
le stockage (1002) de données d'expédition et de données de commande d'assurance de transport associées à un bon de commande sur une chaîne de blocs (216, 606) en se basant sur le lancement d'un algorithme de consensus à travers un nœud de chaîne de blocs associé au système informatique ;
la détermination (1004), en exécutant un contrat intelligent en se basant sur une ou plusieurs règles prédéterminées et sur les données d'expédition, si une commande d'assurance de transport associée aux données de commande d'assurance de transport est valide ou non ;
en réponse à la détermination que la commande d'assurance de transport est valide, la génération (1006), en exécutant le contrat intelligent, d'un message événementiel dédié à un fournisseur d'assurance (318, 610) notifiant qu'une assurance de transport du bon de commande est en vigueur, le contrat intelligent invoquant une fonction de gestion d'événements afin de générer périodiquement le premier message événementiel jusqu'à ce qu'une rétroaction de réception d'accusé de réception soit reçue ;
le stockage (1008) du message événementiel dans une mémoire cache matérielle gérée par le système informatique ;
l'envoi (1010) du message événementiel à un nœud de chaîne de blocs associé au fournisseur d'assurance ; et
le traitement (1012) du message événementiel en réponse à la réception d'un message de rétroaction venant du nœud de chaîne de blocs associé au fournisseur d'assurance.

2. Procédé informatisé (1000) selon la revendication 1, dans lequel le message de rétroaction indique que le message événementiel est reçu par le nœud de chaîne de blocs associé au fournisseur d'assurance (318, 610), et le traitement du message événementiel comprend :
le stockage du message événementiel sur la chaîne de blocs en se basant sur l'exécution de l'algorithme de consensus ; et
la suppression du message événementiel de la mémoire cache matérielle.

3. Procédé informatisé (1000) selon l'une quelconque des revendications précédentes, dans lequel, lorsque le message de rétroaction indique que le message événementiel est reçu incorrectement ou n'est pas reçu dans les limites d'une période de temps prédéterminée, le traitement du message événementiel comprend l'envoi à nouveau du message événementiel au nœud de chaîne de blocs associé au fournisseur d'assurance (318, 610).

4. Procédé informatisé (1000) selon l'une quelconque des revendications précédentes, dans lequel l'envoi (1010) du message événementiel est exécuté périodiquement jusqu'à ce que le message de rétroaction soit reçu.

5. Procédé informatisé (1000) selon l'une quelconque des revendications précédentes, le message événementiel étant un premier message événementiel, le contrat intelligent étant un premier contrat intelligent, le message de rétroaction étant un premier message de rétroaction, le procédé comprenant en outre :
la réception, en provenance du nœud de chaîne de blocs associé au fournisseur d'assurance (318, 610), d'un deuxième message événementiel dirigé vers un ou plusieurs fournisseurs de services, le deuxième message événementiel notifiant une distribution d'une prime d'assurance de transport associée à la commande d'assurance de transport à un ou plusieurs fournisseurs de services ;
l'envoi d'un deuxième message de rétroaction au nœud de chaîne de blocs associé au fournisseur d'assurance indiquant que le deuxième message événementiel a été reçu correctement ;
la détermination, en exécutant un deuxième contrat intelligent en se basant sur une ou plusieurs deuxièmes règles prédéterminées, que la distribution de la prime d'assurance de transport est légale ;
le stockage du deuxième message événementiel sur la chaîne de blocs en se basant sur l'algorithme de consensus ; et
l'envoi du deuxième message événementiel au ou aux fournisseurs de services.

6. Procédé informatisé (1000) selon la revendication 5, comprenant en outre :
la réception de données de distribution de prime d'assurance de transport en provenance du nœud de chaîne de blocs associé au fournisseur d'assurance (318, 610) en réponse à la communication du premier message événementiel au fournisseur d'assurance ; et
le stockage des données de distribution de prime d'assurance de transport sur la chaîne de blocs en se basant sur l'algorithme de consensus.

7. Procédé informatisé (1000) selon la revendication 5, dans lequel le ou les fournisseurs de services comprennent le système informatique et/ou une plate-forme de service d'assurance de transport (302, 602) et/ou un fournisseur d'assurance (318, 610).

8. Procédé informatisé (1000) selon la revendication 5, dans lequel la ou les deuxièmes règles prédéterminées comprennent un plan de distribution de prime d'assurance de transport approuvé par le système informatique, la plate-forme de service d'assurance de transport (302, 602) et le fournisseur d'assurance (318, 610).

9. Procédé informatisé (1000) selon l'une quelconque des revendications précédentes, dans lequel la ou les premières règles prédéterminées comprennent une limite de couverture d'une valeur déclarée du bon de commande et/ou des articles couverts par l'assurance de transport et/ou une limite d'assurance du bon de commande, et la commande d'assurance de transport étant valide lorsque le bon de commande satisfait à la ou aux premières règles prédéterminées.

10. Procédé informatisé (1000) selon l'une quelconque des revendications précédentes, dans lequel les données de commande d'assurance de transport indiquent des articles assurés et/ou une prime d'assurance et/ou une valeur déclarée du bon de commande et/ou une assurance comprise pour le bon de commande.

11. Procédé informatisé (1000) selon l'une quelconque des revendications précédentes, dans lequel l'algorithme de consensus est soit une preuve de travail, soit une preuve d'intérêt, soit une tolérance aux pannes byzantines pratique.

12. Système pour gérer des messages événementiels basés sur une chaîne de blocs, comprenant :
un ou plusieurs processeurs ; et
une ou plusieurs mémoires lisibles par ordinateur couplées au ou aux processeurs et ayant des instructions qui y sont stockées qui sont exécutables par le ou les processeurs afin d'exécuter le procédé (1000) selon l'une quelconque des revendications 1 à 11.

13. Support ou supports de stockage non transitoires lisibles par ordinateur ayant des instructions qui y sont stockées qui, lorsqu'elles sont exécutées par un ou plusieurs processeurs, amènent le ou les processeurs à exécuter le procédé (1000) selon l'une quelconque des revendications 1 à 11.
